# EUROPÄISCHE PATENTSCHRIFT

(11) **EP 4 227 155 B1**
(45) Veröffentlichungstag und Bekanntmachung des Hinweises auf die Patenterteilung: **30.10.2024**
(21) Anmeldenummer: 23152012.3
(22) Anmeldetag: 17.01.2023
(51) Int. Cl.: B60P 1/64, B60P 7/13

(54) **BAUFAHRZEUG MIT EINEM BASISFAHRZEUG UND EINEM AUFBAU**
CONSTRUCTION VEHICLE WITH A BASE VEHICLE AND A BODY
VÉHICULE DE CONSTRUCTION DOTÉ D'UN VÉHICULE DE BASE ET D'UNE STRUCTURE

(30) Priorität: 27.01.2022 DE 102022101937
(43) Veröffentlichungstag der Anmeldung: 16.08.2023
(73) Patentinhaber: Wacker Neuson Linz GmbH, 4063 Hörsching (AT)
(72) Erfinder: Mühlberghuber, Philipp, 4040 Linz (AT); Mayr, Thomas, 4550 Kremsmünster (AT)
(74) Vertreter: Otten, Roth, Dobler & Partner mbB Patentanwälte

(56) Entgegenhaltungen:
- DE-A1- 3 138 824
- DE-U1- 29 905 528
- GB-A- 1 489 113
- JP-B2- 5 052 637

## Beschreibung

Die Erfindung betrifft ein Baufahrzeug nach dem Oberbegriff des Anspruchs 1.

### Stand der Technik

Unterschiedlichste Baufahrzeuge sind unter dem Begriff Dumper oder Muldenkipper bekannt. Ein solches Baufahrzeug ist beispielsweise in der Druckschrift EP 3 211 141 A2 beschrieben. Das dort beschriebene Baufahrzeug ist als Spezialfahrzeug mit einer sog. "Knick-Lenkung" nur zur Verwendung als Dumper oder Muldenkipper zu verwenden. Weitere Baufahrzeuge sind beispielsweise aus der GB 1 489 113 A, der DE 299 05 528 U1, der DE 43 27 346 A1 oder der DE 31 38 824 A1 bekannt.

Darüber hinaus sind auch Dumper mit Achsschenkellenkung, Panzerlenkung, Hinterrad-, Vorderrad- oder Allradlenkung bekannt. Viele Lastkraftwagen bzw. sog. Sattelschlepper weisen eine Mulde zum Kippen bzw. Entladen des Baumaterials auf, die teilweise auch ausgetauscht werden können.

Aus der Druckschrift GB 2 440 675 A ist ein sog. Betonmischer mit wechselbarem Betonbehälter offenbart, wobei der Auflieger bzw. Fahrzeugrahmen zum Wechseln des Aufbaus einen Hebe-/ Hubmechanismus aufweist, der u.a. einen Hubzylinder bzw. Hydraulikzylinder umfasst.

Für den Transport der Behälter sind diese am Auflieger bzw. Fahrzeugrahmen gesichert. Hierfür sind für die sichere Verriegelung des Aufbaus vier manuelle Verriegelungsmechanismen vorhanden, die den Behälter bzw. dessen Sicherungsbolzen auf beiden Seiten des Fahrzeugrahmens bzw. Aufliegers sowie vorne und hinten jeweils mit einem Riegel sichern/verriegeln/fixieren. Das manuelle Verriegeln an vier am Fahrzeug verteilten Stellen ist sehr aufwändig und umständlich.

Darüber hinaus sind bereits Sicherungsmechanismen für Aufbauten mit speziellen Stell-/Hubzylindern sowie z.T. diversen Zugseilen und Rückstellfedern oder dergleichen bei Baufahrzeugen bekannt geworden, so dass eine halbmanuelle Betätigung mittels einem Stellglied realisierbar ist. Diese Sicherungs- bzw. Verriegelungssysteme sind jedoch konstruktiv aufwändig und störanfällig.

### Aufgabe und Vorteile der Erfindung

Aufgabe der Erfindung ist es demgegenüber, ein Baufahrzeug mit einem Basisfahrzeug und einem Aufbau vorzuschlagen, das wenigstens teilweise die Nachteile des Standes der Technik verbessert, insb. mit geringerem Aufwand realisiert wird und/oder einen sicheren Betrieb bzw. eine sichere Arbeitsweise gewährleistet und/oder neuartige Funktionalitäten ermöglicht.

Diese Aufgabe wird, ausgehend von einem Baufahrzeug der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßes Baufahrzeug dadurch aus, dass die als Ent-/ Verriegelungs- und/oder Spanneinheit ausgebildete, insbesondere lineare Antriebseinheit auch als der Hubantrieb der Hubvorrichtung ausgebildet ist, wobei ein hinteres fahrzeugseitiges Kupplungselement (17) eine von hinten nach vorne abwärts verlaufend Führungsfläche (18) und ein vorderes fahrzeugseitiges Kupplungselement (10) eine von vorne nach hinten abwärtsverlaufende Ent-/Verriegelungs- und/oder Spannfläche (13) aufweist und/oder dass in einem am Basisfahrzeug (1) verriegelten und/oder verspannten Zustand des Wechselaufbaus (30) ein hinteres aufbauseitiges Kupplungselement (21) die abwärts verlaufende Führungsfläche (18) des hinteren fahrzeugseitigen Kupplungselementes (17) und ein vorderes aufbauseitiges Kupplungselement (16) die abwärts verlaufende Ent-/Verriegelungs- und/oder Spannfläche (13) des vorderen fahrzeugseitigen Kupplungselementes (19) untergreift.

So wird gemäß der Erfindung mittels der Antriebseinheit einerseits zumindest ein aktives Anheben des Wechselaufbaus und andererseits zumindest ein aktives Ent- bzw. Verriegeln/Verspannen vorgesehen bzw. verwirklicht. Mit Hilfe dieser Doppelfunktion der Antriebseinheit für das Ent- bzw. Verriegeln/Verspannen und zugleich auch für das Anheben/Absenken kann eine deutliche Reduktion des konstruktiven als auch finanziellen und zudem auch des steuerungstechnischen Aufwandes umgesetzt werden.

Darüber hinaus wird auch die Betriebssicherheit bzw. die Störanfälligkeit gegenüber dem Stand der Technik durch die Verringerung der Komplexität des Gesamtsystems bzw. die Doppelnutzung der Antriebseinheit verbessert.

Gerade das (aktive) Ent- bzw. Verriegeln/Verspannen der Ent-/ Verriegelungs- und/oder Spanneinheit steht im krassen Gegensatz zu vielen passiven Sicherungssystemen zum Sichern bzw. einfachen Halten/Positionieren des Wechselaufbaus. Das bedeutet, dass beim Stand der Technik vielfach einfache, mechanische Anschläge und z.T. Reibflächen-Halterungen vorgesehen sind, die lediglich ein Sichern/Positionieren, bzw. Verrutschen des Wechselsaufbaus nach vorne beim Bremsen mittels Anschlägen aufweisen. Hierbei ist oftmals nach hinten, d.h. beim Beschleunigen, eine einfache Reibfläche vorgesehen, d.h. der Aufbau liegt lediglich auf dem Basisfahrzeug/Fahrzeugrahmen auf und generiert mit seinem vgl. großen Gewicht eine entspr. Reibkraft, die ein Verrutschen nach hinten bei den vgl. geringen Beschleunigungen verhindern, die üblicherweise Lastkraftwagen etc. realisieren können. Dagegen sind die offenbarten manuellen Riegel der eingangs aufgeführten Druckschrift GB 2 440 675 A ein echtes und sicheres mechanische Verriegeln, sowohl nach vorne, nach hinten und auch nach oben, d.h. gegen ungewolltem Abheben z.B. bei Bodenunebenheiten während der Fahrt.

Im Sinn der Erfindung ist ein derartiges "echtes" bzw. sicheres und mechanisches Verriegeln, d.h. festes/sicheres Fixieren, des Wechselaufbaus in vorteilhafter Weise mit der Antriebseinheit aktiv umsetzbar.

Mit der vorteilhaften Antriebseinheit kann u.a. auch ein sicheres bzw. spielfreies Verriegeln realisiert werden. Das bedeutet, dass im Verspannten bzw. Verriegelten Zustand kein Zwischenraum bzw. Luft-/Spalt oder eine Toleranz zwischen den beiden Verriegelungskomponenten des Basisfahrzeugs und des Wechselaufbaues vorhanden ist. So wird ein sog.

"Ausleihern" oder "Ausschlagen" der Verriegelung wirkungsvoll verhindert, selbst bei Verschließ bzw. Abrieb. Dementsprechend wird ein festes, wackelfreies Fixieren des Wechselaufbaus auch über lange Zeiträume bzw. auch bei Verschließ oder Abrieb erreicht. Dies ist gerade bei den großen Kräften bzw. Gewichten derartiger Aufbauten bei Baufahrzeugen von großer Bedeutung, insb. für die Betriebssicherheit und/oder die Lebensdauer. Die manuellen Riegel oder Rückstellfedern gemäß dem oben genannten Stand der Technik weisen entweder zwangsweise ein gewisses Spiel auf, um manuell den Riegel in die Halterung einführen zu können, und/oder weisen nur geringe Haltekräfte auf, z.B. lediglich die Rückstellfederkraft, ggf. plus Reibkräfte.

Das Basisfahrzeug weist eine fahrzeugseitige Kupplungseinheit zum An- und Abkuppeln des Wechselaufbaus auf, wobei zudem ein Wechselaufbau vorgesehen ist, der ein oder mehrere aufbauseitige Kupplungselemente zum Ankuppeln des Wechselaufbaus an das Basisfahrzeug umfasst. Das Basisfahrzeug kann also ohne Aufbau oder mit einem anderen Aufbau verwendet werden. Dadurch ist eine flexiblere Verwendung des Basisfahrzeugs für funktional andere Aufbauten möglich, z.B. kippbare Mulde, sog. Dreiseitenkipper, Absetzkipper, Wasser- bzw. Flüssigkeitsbehälter, Druckbehälter, offene oder (teilweise) geschlossene Plattformen/Aufbauten und/oder Betonmischer etc.. Auch unterschiedliche Muldenaufbauten sind erfindungsgemäß flexibel einsetzbar. Zudem kann auch ein defekter Aufbau oder ein defektes Basisfahrzeug schnell gewechselt werden.

Vorteilhafterweise weist das Basisfahrzeug die Antriebseinheit und wenigstens ein fahrzeugseitiges und/oder aufbauseitiges Kupplungselement auf, dessen Stellung durch die Antriebseinheit veränderbar ist. Mit einer derartigen Antriebseinheit lässt sich über die Verstellung des fahrzeugseitigen und/oder aufbauseitigen Kupplungselementes das Ab- und Ankuppeln bzw. sichere Verriegeln des Aufbaus leichter bewerkstelligen.

In einer besonderen Weiterbildung der Erfindung ist vorgesehen, dass die Antriebseinheit eine lineare Antriebseinheit, insbesondere ein hydraulischer Hubzylinder, und/oder dass ein Abstand wenigstens zweier Kupplungselemente zueinander durch die Antriebseinheit veränderbar ist. Mit zwei in einem Abstand voneinander angeordneten Kupplungselementen ist eine stabilere Verankerung des Aufbaus am Basisfahrzeug möglich, was insbesondere dann von besonderem Vorteil ist, wenn z.B. der Aufbau eine Kippfunktion aufweist und der Aufbau somit in unterschiedlichen Lastzuständen am Basisfahrzeug zu halten ist.

Durch die Verstellung des Abstandes zwischen den beiden Kupplungselementen können diese mit einem gemeinsamen Antriebselement betätigt werden. Darüber hinaus ist damit auch eine Verriegelung/Verspannung des Aufbaus wie weiter unten noch erläutert wird, möglich. Mit einer Verspannung kann wiederum eine spielfreie Befestigung verwirklicht werden, die zudem unabhängig vom Verschleiß der Kupplungselemente sein kann.

Wird die eine Verstell- und/oder Antriebsrichtung der linearen Antriebseinheit und/oder des ersten fahrzeugseitigen Kupplungselementes parallel zur Längsrichtung und/oder Fahrtrichtung des Basisfahrzeugs, insbesondere in Geradeausfahrt, d.h. in Längsrichtung des Basisfahrzeugs ausgerichtet, so sind damit auch entsprechend in Längsrichtung voneinander in einem Abstand angeordnete fahrzeugseitige und/oder aufbauseitige Kupplungselemente zu betätigen. Damit ist eine gute und sichere sowie spielfreie Befestigung des Aufbaus gegenüber Lastveränderungen in Längsrichtung möglich, insbesondere auch bei Verschließ bzw. Abrieb der Kupplungselemente. Derartige Lastveränderungen liegen nicht nur während der Fahrt, sondern auch beispielsweise bei einem Muldenaufbau vor, wenn die Mulde nach hinten abgekippt wird.

Vorteilhafterweise umfasst die Hubvorrichtung wenigstens ein eine Kontaktfläche aufweisendes Angriffselement zum Anordnen am Wechselaufbau und/oder zum Anheben des Wechselaufbaus in einer Hubposition, wobei insbesondere der Schwerpunkt des Wechselaufbaus zumindest in der Hubposition zwischen der Kontaktfläche des Angriffselements und der ersten Drehachse angeordnet ist und/oder dass die Hubvorrichtung in der Hubposition zum Anheben des Wechselaufbaus mit einem bezogen auf die in die erste Fahrtrichtung, insbesondere die Vorwärtsfahrtrichtung mit einer vor dem Aufbau angeordneten Fahrereinheit und/oder Fahrerkabine, vor dem Schwerpunkt des Wechselaufbaus angeordneten Angriffselement an diesem Wechselanbau angreift.

Um das Basisfahrzeug unter einem abgekoppelten Wechselaufbau herauszufahren, sollte der Wechselaufbau gegenüber dem Basisfahrzeug angehoben sein. Hierzu ist am Basisfahrzeug die Hubvorrichtung mit einem Hubantrieb zum Anheben des Wechselaufbaus vorgesehen sein. Somit kann der Wechselaufbau mittels der fahrzeugseitigen Hubvorrichtung in erhöhter Position z.B. auf wenigstens zwei oder drei, insb. vier Stützen oder dergleichen abgestellt werden, so dass sich in vorteilhafter Weise das Basisfahrzeug im Anschluss daran unter dem Wechselaufbau herausfahren lässt.

Gegebenenfalls ist die Kippachse des Wechselaufbaus und/oder der Mulde zugleich die erste Drehachse des Wechselaufbaus bzw. der Mulde. Hiermit wird in vorteilhafter Weise eine Doppelfunktion der ersten Drehachse verwirklicht bzw. vorgesehen, nämlich zum Verkippen und zum Wechseln. Dies unterstützt auch die Doppelfunktion der Antriebseinheit. So ist eine konstruktiv wenig aufwändige und wirtschaftlich günstige Umsetzung realisierbar.

So ist es gegenüber einer vertikalen Hubbewegung des Wechselaufbaus ausreichend und einfacher, den Wechselaufbau einseitig schräg anzuheben. Dies lässt sich z.B. dadurch erreichen, dass in vorteilhafter Weise die Hubvorrichtung in Hubposition zum Anheben des Wechselaufbaus mit einem bezogen auf die Vorwärtsfahrtrichtung vor dem Schwerpunkt des Wechselaufbaus angeordnetem Angriffselement am Wechselanbau angreift. Durch diese Anordnung des Angriffsortes wird der Wechselaufbau bei Betätigung der Hubvorrichtung schräg an seiner Vorderseite angehoben werden, so dass danach das Fahrzeug in vorteilhafter Weise unter dem Wechselaufbau (vorwärts) herausfahren kann.

Zum Abkoppeln und Abstellen des Wechselaufbaus können vor dem Anheben beispielsweise wenigstens zwei hintere Stützen angebracht werden, auf denen sich der Wechselaufbau beim Anheben auf der Vorderseite abstützt. Sodann können auch weiter vorne bzw. von den hinteren Stützen beabstandete Stützen, beispielsweise wenigstens zwei vordere Stützen, angebracht werden, auf die sich der Wechselaufbau dann beim Absenken der Hubvorrichtung abstützt, wobei ein wenig Abstand zum Chassis des Basisfahrzeugs verbleibt und dieses unter dem Wechselaufbau herausfahren kann.

Die Hubvorrichtung nutzt die als Ent-/Verriegelungs- und/oder Spanneinheit in einer vorteilhaften Ausführung vorgesehene lineare Antriebseinheit, so dass kein separater Antrieb für die Hubvorrichtung erforderlich ist. Der lineare Antrieb zum Ent-/ Verriegeln- und/oder Verspannen der Kupplungselemente ist dementsprechend auch der Hubantrieb der Hubvorrichtung.

In einer vorteilhaften Variante der Erfindung umfasst die Hubvorrichtung eine Hebelanordnung, insbesondere einen Kniehebel, wobei insbesondere die Hebelanordnung und/oder der Kniehebel zumindest die Kontaktfläche und/oder das Angriffselement aufweist. Um z.B. aus der im Wesentlichen horizontalen und/oder linearen Bewegung des Antriebs gemäß der Erfindung eine anders/unterschiedlich ausgerichtete Verstellung und/oder zumindest teilweise vertikal ausgerichtete Querbewegung bzw. Hubbewegung abzuleiten, ist die in einer besonderen Ausführungsform ausgebildete Hubvorrichtung mit der Hebelanordnung versehen, die insbesondere den Kniehebel umfassen kann. Zugleich kann in vorteilhafter Weise bei entsprechender Dimensionierung und Anordnung mit dem Kniehebel auch eine Kraftübersetzung verwirklicht werden, da je nach Ausführungsform die Kraftanforderungen für die Hubvorrichtung von denen für die Verspannung/Verriegelung der Kupplungselemente abweichen können.

Alternativ zur vorbeschriebenen Hubvorrichtung könnte die Hubvorrichtung auch unabhängig von dem Antrieb der Kupplungselemente, beispielsweise in Form eines höhenverstellbaren Fahrwerks oder einem oder mehreren separaten Hubzylindern am Wechselaufbau oder dem Basisfahrzeug realisiert sein.

Vorteilhafterweise ist wenigstens eine erste Antriebsphase der insbesondere als Hubantrieb ausgebildeten Antriebseinheit als Ent-/Verriegelungs- und/oder Spannphase ausgebildet und zudem ist eine zweite Antriebsphase der insbesondere als Hubantrieb ausgebildeten Antriebseinheit als Hebe- oder Senkphase der Hubvorrichtung ausgebildet. Hiermit kann in vorteilhafter Weise eine mechanische und/oder zeitliche Entkopplung bzw. zeitlich versetzte Betriebsweise der unterschiedlichen Betriebs- bzw. Antriebsphasen verwirklicht werden, insb. mit dem gemeinsamen Antrieb bzw. der gemeinsamen Antriebseinheit.

In einer vorteilhaften Weiterbildung der Erfindung wird ein Freilauf über eine Freilaufstrecke, insbesondere in Form einer Langlochführung mit einem mit der Hebelanordnung verbundenen Anschlagelement, vorgesehen. Die Freilaufstrecke sollte dabei größer oder gleich sein, wie eine zur Verspannung und/oder Verriegelung vorgesehene Abstandsänderung zwischen zwei zur Verspannung und/oder Verriegelung des Wechselaufbaus vorgesehenen Kupplungselementen. Die Verwendung eines solchen Freilaufs ermöglicht die von der Hubvorrichtung unbeeinflusste Ent-/Verriegelungs- und/oder Verspannung und Entspannung der Kupplungselemente. Diese Betätigung der Kupplungselemente kann vorgenommen werden, während sich die Hubvorrichtung im Freilauf der Antriebsvorrichtung befindet.

So können beispielsweise die Kupplungselemente unmittelbar mit dem Antrieb, insbesondere mit einem Hubzylinder verbunden sein, während die Hubvorrichtung z.B. über einen in einer Langlochführung gleitenden Mitnehmerelement/-bolzen bewegt wird und solange in Ruhestellung verbleibt, bis das/der Mitnehmerelement/-bolzen an einem Endanschlag der Langlochführung anschlägt. In diesem Zeitpunkt ist der Wechselaufbau bereits entriegelt oder entspannt, so dass er problemlos angehoben werden kann, während der Abstand der Kupplungselemente weiter verringert wird. In umgekehrter Richtung wird der Wechselaufbau abgesenkt, während sich die Kupplungselemente gleichzeitig auseinander bewegen, die Verspannung/Verriegelung jedoch erst einsetzt, wenn der Wechselaufbau seine unterste Position erreicht hat und die Hubvorrichtung in den Freilauf geht.

In einer vorteilhaften Gestaltung der Kupplungseinheit weist wenigstens eines der fahrzeugseitigen und/oder aufbauseitigen Kupplungselemente eine gegenüber der Längsachse und/oder Fahrtrichtung des Basisfahrzeugs schräg verlaufende Ent-/ Verriegelungs- und/oder Spannfläche auf. Mit derartigen schräg verlaufenden Ent-/Verriegelungs- und/oder Spannflächen lassen sich mit Hilfe eines linearen Schubs Ent-/Verriegelungs- und/oder Spannkräfte erzeugen, die schräg oder orthogonal zur Schubrichtung gerichtet sind. Durch ein solches Kupplungselement kann also ein Aufbau an einem Chassis des Basisfahrzeugs verspannt werden. Eine solche Bauform hat den weiteren Vorteil, dass bei Verschleiß der Ent-/Verriegelungs- und/oder Spannfläche oder des daran anliegenden Bauteils die gewünschte Verriegelungs-/Spannkraft durch einen Spann-/Druck in der Schubrichtung erhalten bleibt. Ein solches Kupplungselement kann beispielsweise als linear verschiebbarer Ent-/Verriegelungs- und/oder Spannkeil ausgebildet sein.

Üblicherweise weisen Baufahrzeuge eine bevorzugte sogenannte Vorwärtsfahrt und eine sogenannte Rückwärtsfahrt auf. Bei der sog. Vorwärtsfahrt ist hierbei üblicherweise die Fahrerkabine bzw. der Fahrer vor dem Aufbau bzw. der Kippeinheit und bei der sog. Rückwärtsfahrt ist hierbei üblicherweise die Fahrerkabine bzw. der Fahrer hinter dem Aufbau bzw. der Kippeinheit angeordnet. Entsprechendes trifft auch auf die sog. Rückseite des Fahrzeugs und die entspr. sog. Vorderseite des Fahrzeugs zu.

Jedoch kann in vorteilhafter Weise das Baufahrzeug, insbesondere ein Dumper oder dergleichen, eine insbesondere um eine im Wesentliche vertikal ausgerichtete Drehachse drehbare Fahrerkonsole bzw. Fahrerkabine aufweisen, so dass der Fahrer in beide Fahrtrichtungen "nach vorne" blicken kann und es keine festen, sog. "Vorwärts-/Rückwärts-Richtungen" bzw. "Vorder-/ Rückseiten" gibt. Im Sinn der Erfindung fährt hierbei das Fahrzeug in zwei unterschiedlichen Weisen "vorwärts", einmal bei der der Aufbau in Bezug auf die Fahrtrichtung hinter und einmal bei der der Aufbau in Bezug auf die Fahrtrichtung vor dem Fahrer bzw. der Fahrerkabine angeordnet ist.

Nachfolgend soll jedoch bei der sog. Rückwärtsfahrt im Sinn der Erfindung die Fahrt bzw. Fahrtrichtung verstanden werden, bei der der Aufbau vor dem Basisfahrzeug bzw. der Fahrereinheit angeordnet ist. Entsprechend die sog. Vorwärtsfahrt im Sinn der Erfindung soll die Fahrt bzw. Fahrtrichtung verstanden werden, bei der der Aufbau hinter dem Basisfahrzeug bzw. der Fahrereinheit angeordnet ist. Zudem soll nachfolgend im Sinn der Erfindung die sog. Rückseite die Seite des Fahrzeugs bezeichnen, die bei der vorgenannten sog. Vorwärtsfahrt nach hinten bzw. gegen die Vorwärtsfahrtrichtung ausgerichtet/exponiert ist. Die Vorderseite weist in diesem Sinn bei der vorgenannten sog. Vorwärtsfahrt nach vorne.

Weiterhin ist es von Vorteil, wenn ein fahrzeugseitiges Kupplungselement eine zu einer in Bezug auf die Fahrereinheit und/oder die Fahrerkabine abgewandten Seite, insbesondere zu einer Rückseite, des Basisfahrzeugs gerichtete Aufnahmeöffnung zur Aufnahme wenigstens eines aufbauseitigen Kupplungselementes aufweist. Dadurch kann durch eine Rückwärtsfahrt des Basisfahrzeugs ein passendes aufbauseitiges Kupplungselement von diesem fahrzeugseitigen Kupplungselement aufgenommen werden.

Weist das fahrzeugseitige Kupplungselement mit Aufnahmeöffnung zwei schräg in eine erste Fahrtrichtung, insbesondere einer Vorwärtsfahrtrichtung mit einer vor dem Aufbau angeordneten Fahrereinheit und/oder Fahrerkabine, zueinander hin verlaufende Führungsflächen auf, so wird ein V-förmige Führung gebildet, in der das passende aufbauseitige Kupplungselement in seine Endlage geführt wird. Zugleich kann wenigstens eine dieser Führungsflächen als Ent-/Verriegelungs- und/oder Spannfläche vorgesehen sein, um den Wechselaufbau über das aufbauseitige Kupplungselement mit dem Basisfahrzeug, z.B. an dessen Chassis, zu verriegeln/verspannen.

Eine derartigen Verriegelung/Verspannung lässt sich beispielsweise mit einem einzigen linearen Antrieb herbeiführen, wenn ein hinteres fahrzeugseitiges Kupplungselement eine von hinten nach vorne abwärts verlaufend Führungsfläche und ein vorderes fahrzeugseitiges Kupplungselement eine von vorne nach hinten abwärtsverlaufende Ent-/Verriegelungs- und/oder Spannfläche aufweist. Somit können zwei fahrzeugseitige Kupplungselemente in der zusammengezogenen Position unter zwei aufbauseitige Kupplungselemente gebracht werden, die fest am Wechselaufbau angebracht sind, und in einer auseinander gedrückten Position unter diese greifen und dabei die fahrzeugseitigen und aufbauseitigen Kupplungselemente gegenseitig verspannen/verriegeln.

In diesem am Basisfahrzeug verspannten/verriegelten Zustand des Wechselaufbaus untergreift also ein hinteres aufbauseitiges Kupplungselement die abwärts verlaufende Führungsfläche des hinteren fahrzeugseitigen Kupplungselementes und ein vorderes aufbauseitiges Kupplungselement die abwärts verlaufende Ent-/ Verriegelungs- und/oder Spannfläche des vorderen fahrzeugseitigen Kupplungselementes.

Vorteilhafterweise ist wenigstens eine zweite Drehachse vorgesehen, um die der Wechselaufbau während der An- und/oder Abkuppel-Phase mit einem zweiten Radius verdrehbar ist, wobei der Wechselaufbau in einer ersten Drehphase um die erste Drehachse drehbar und in einer zweiten Drehphase um die zweite Drehachse drehbar ist. Hierbei ist vorzugsweise der erste Radius der ersten Drehachse anders/unterschiedlich, insb. kleiner als der zweite Radius der zweiten Drehachse.

So kann der Wechselaufbau während der An- und/oder Abkuppel-Phase in vorteilhafter Weise um die erste Drehachse mit einem ersten Radius verdreht werden, wobei in einer zweiten Drehphase der Wechselaufbau in vorteilhafter Weise um die zweite Drehachse dreht, wobei insbesondere der erste Radius der ersten Drehachse kleiner als der zweite Radius der zweiten Drehachse ausgebildet wird und/oder wobei die erste Drehachse als Ent-/Verriegelungs- und/oder Spannelement der Ent-/Verriegelungs- und/oder Spanneinheit ausgebildet wird und/oder wobei die zweite Drehachse als Stützelement des Wechselaufbaus ausgebildet wird.

In einer vorteilhaften Variante der Erfindung ist die erste Drehachse als Bolzenelement des Wechselaufbaus und/oder als Ent- bzw. Verriegelungs- und/oder Spannelement der Ent-/ Verriegelungs- und/oder Spanneinheit ausgebildet ist und/oder dass die zweite Drehachse als Stützelement des Wechselaufbaus ausgebildet. Hiermit ergibt sich eine konstruktive bzw. verfahrenstechnische und somit eine wirtschaftliche Verbesserung. Vorteilhafterweise kann auch eine optional vorzusehende Längenverstelleinheit der zweiten Drehachse des Stützelements, insb. mit Fixiermöglichkeit/-element, entweder manuell und/oder halb-/automatisch verwendet werden. Hiermit kann eine vorteilhafte Anpassung der Länge des Stützelementes an Bodenunebenheiten oder dergleichen realisiert werden.

Um zu gewährleiten, dass der Wechselaufbau zuverlässig am Basisfahrzeug fixiert ist, kann zur Überwachung eine Sensoreinheit, insbesondere in Form eines durch ein aufbauseitiges Kupplungselement beweglichen, mechanischen Tasters, zur Erkennung eines angekuppelten Wechselaufbaus vorgesehen sein.

Eine solche Sensoreinheit kann in vorteilhafter Weise auch dazu verwendet werden, die Kontrolleinheit des Basisfahrzeugs mit einem Sicherheitssystem auszustatten. Beispielsweise kann das Basisfahrzeug eine Kontrolleinheit für ein von der Art des angekuppelten Wechselaufbaus abhängige Kontrolle der Fahrtgeschwindigkeit aufweisen. Auch eine Kontrolle der Fahrtgeschwindigkeit abhängig davon, ob ein Wechselaufbau angekuppelt ist oder nicht, ist möglich.

Zur leichteren Bedienung beim Aufnehmen und Abstellen des Wechselaufbaus ist es von Vorteil, wenn ein außerhalb der Fahrereinheit angeordnetes Bedienelement für die Bedienung der Ent-/Verriegelungs- und/oder Spanneinheit vorgesehen ist.

Weiterhin ist es von Vorteil, wenn die Kontrolleinheit wenigstens zwei von der Bedienperson wählbare Betriebsmodi, z.B. einen Fahrmodus und einen Wechselmodus aufweist, wobei im Fahrmodus eine Aktivierung wenigstens einer Fahrfunktion, wie der automatische Nachspannung der Ent-/Verriegelungs- und/oder Spanneinheit und/oder der Kontrolle der Fahrtgeschwindigkeit vorgesehen ist. Im Wechselmodus wiederum kann eine Deaktivierung einer solchen Fahrfunktion und/oder eine Aktivierung einer Wechselfunktion, wie z.B. die Freigabe des außerhalb der Fahrereinheit angeordneten Bedienelementes, vorgesehen werden.

In einer vorteilhaften Variante der Erfindung ist z.B. als Sicherheitsfunktion vorgesehen, dass die Baumaschine bzw. das Basisfahrzeug in vorteilhafter Weise nur dann fahren kann, wenn die Ent-/Verriegelungs- und/oder Spanneinheit bzw. die Antriebseinheit/Hydraulikzylinder angesteuert ist, d.h. insb. mit Spannenergie-/-kraft bzw. Druck beaufschlagt ist. Die Ent-/ Verriegelungs- und/oder Spanneinheit wird in vorteilhafter Weise im Betrieb dauerhaft gespannt bzw. mit Druck/Spannenergie beaufschlagt. So kann auch eine dauerhafte Spielfreiheit erreicht werden, wenn sich die Kontaktflächen der Verriegelung im Laufe der Zeit abnutzen. Dementsprechend wird die Betriebssicherheit hiermit weiter verbessert.

Darüber hinaus können in einer besonderen Weiterbildung der Erfindung zur Betätigung bzw. zum Betreiben des Systems in vorteilhafter Weise zwei Betätigungselemente wie z.B. zwei Schalter bzw. Taster vorgesehen werden. Mit einer vorteilhaften Verschaltung dieser kann z.B. sichergestellt werden, dass die Fahrfunktion und/oder auch die Wechselfunktion (nur) dann freigegeben wird, wenn die Schalter/Taster in der richtigen Kombination stehen bzw. betätigt sind.

Generell kann der Aufbau wie eine Mulde, Wasser-/Flüssigkeits-/ Behälter, Plattform, Verschlag oder dergleichen eines Baufahrzeugs, wie z.B. eines Dumpers, Betonmischers, Spritzers etc., jeweils auf den Transport des jeweiligen Gutes wie von Schüttgut optimiert werden. Um die Baumaschine bzw. das Basisfahrzeug vielseitiger einsetzen zu können, kann mit einem halbautomatischen Aufbau-Wechselsystem gearbeitet werden.

Ein Baumaschinen-System gemäß der Erfindung, d.h. beispielsweise ein oder mehrere gemeinsame Basisfahrzeuge mit einem oder mehreren, ggf. verschiedenen Kipp- bzw. Mulden-Aufbauten und/oder mit einem Flüssigkeitstank und/oder einer Plattform etc. kann folgende Anforderungen bzw. Vorteile einzeln oder in Kombination erfüllen:
- Die Baumaschine bzw. das Basisfahrzeug wie ein Dumper soll seine Hauptaufgabe, d.h. den Transport von Gütern wie z.B. Schüttgut, uneingeschränkt weiter ausführen können.
- Der Aufbau soll von einer einzelnen Person ohne den Einsatz von zusätzlichen Maschinen, beispielsweise einem Kran, und ohne den Einsatz von Werkzeug gewechselt werden können.
- Der Aufbau soll automatisch und spielfrei verriegelt werden, um z.B. zusätzliche dynamische Krafteinträge in das System auf ein Minimum zu reduzieren.
- Bei Verschleiß der Verriegelungskomponenten kann die spielfreie Anbindung bestehen bleiben.
- Der Aufbau soll automatisch angehoben werden.
- Der Aufbau kann innerhalb 20 Minuten gewechselt werden.
- Halbautomatisches und spielfreies Aufbau-Wechselsystem, das von nur einem Hydraulikzylinder betrieben wird.
- Schräges Anheben des Aufbaus.

### Ausführungsbeispiel

Ein Ausführungsbeispiel der Erfindung ist in der Zeichnung dargestellt und wird anhand der Figuren nachfolgend näher erläutert.

Im Einzelnen zeigen:
- Fig.1: eine perspektivische Ansicht eines erfindungsgemäßen Baufahrzeugs,
- Fig. 2: eine Ausschnittvergrößerung aus Fig. 1,
- Fig. 3: eine Seitenansicht des Antriebs der Kupplungselemente,
- Fig. 4: eine Seitenansicht des Antriebs der Kupplungselemente und der Hubvorrichtung in verschiedenen Positionen,
- Fig. 5: eine perspektivische Darstellung der Anordnung eines Verriegelungstasters,
- Fig. 6 bis 8: Teildarstellungen des Baufahrzeugs im Längsschnitt in verschiedenen Phasen beim Abstellen eines Wechselaufbaus,
- Fig. 9 und 10: perspektivische Darstellungen des Baufahrzeugs in verschiedenen Phasen beim Abstellen eines Wechselaufbaus,
- Fig. 11 bis 13: Ausschnitte der Seitenansichten von Entriegelungs- und Anhebe-Phase bzw. einer Abkopplungsphase in verschiedenen Positionen und
- Fig. 14 und 15: Seitenansichten, des Antriebszylinders mit einem Kniehebel und Langloch in verschiedenen Positionen.

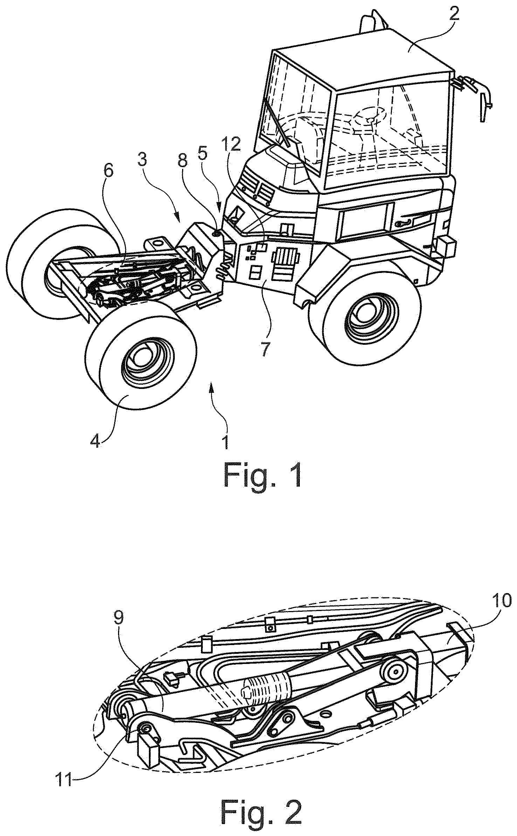

Fig. 1 zeigt ein Basisfahrzeug 1 für einen Wechselaufbau gemäß der Erfindung mit Fahrerkabine 2, Fahrzeugrahmen bzw. Chassis 3 und Laufrädern 4. Das Basisfahrzeug 1 verfügt im dargestellten Ausführungsbeispiel über eine Knicklenkung 5, d.h. das Chassis 3 besteht aus zwei Chassis-Teilen 6, 7, die über ein Knickgelenk 8 verbunden sind. Selbstverständlich kann das Basisfahrzeug 1 jedoch auch alle anderen, allg. bekannten Lenkungsarten wie Achsschenkellenkung, Panzerlenkung, Hinterrad-, Vorderrad- oder Allradlenkung aufweisen, was neben Laufrädern 4 auch

Kettenantriebe und/oder Pendelachsen oder dergleichen umfasst. Lediglich aus Gründen der Übersichtlichkeit bzw. Straffung ist auf eine nähere Darstellung sowie weitere Erläuterungen von anderen Lenkungsarten sowie Kettenantriebe verzichtet worden.

Wie in der Vergrößerung nach Fig.2 erkennbar ist, befindet sich mittig im hinteren Chassis-Teil 6 ein Spannzylinder 9, der vorne einen Spannkeil 10 trägt und hinten über einen Bolzen 11 am Chassis befestigt ist. Ein Bedientaster 12 ist am vorderen Chassis-Teil 7 angebracht, um den Spannzylinder außerhalb des Fahrerhauses 2 zu bedienen.

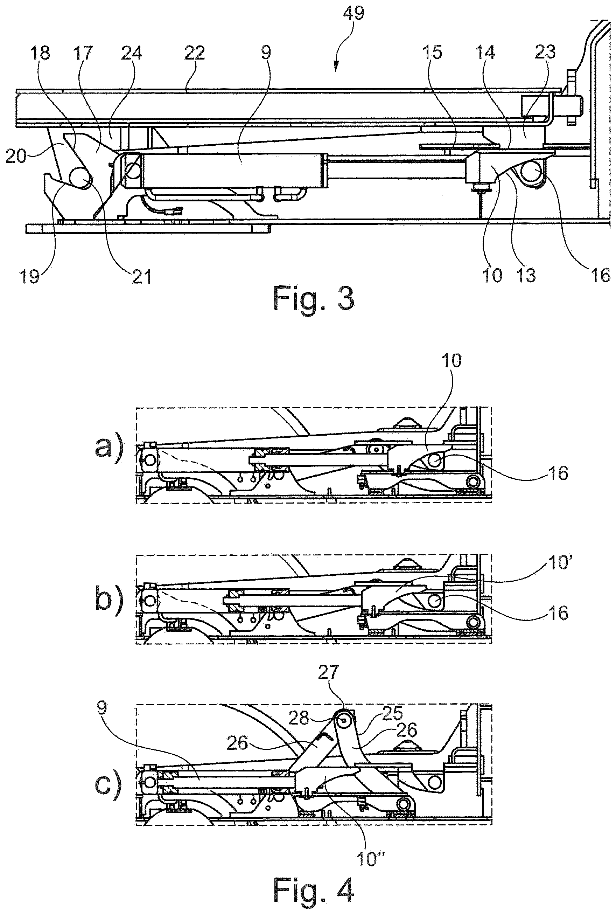

In Fig. 3 ist der an der Kolbenstange befestigte Spannkeil 10 mit seiner Spannfläche 13, die von vorne nach hinten abwärts verläuft, besser erkennbar. An seiner Oberseite 14 ist der Spannkeil 10 eben und gleitet entlang von Klemmblechen 15. Mit der Spannfläche 13 spannt der Spannkeil 10 einen vorderen Verriegelungsbolzen 16 nach unten, der zu einem Wechselaufbau gehört und diesen an dem Chassis 3 des Basisfahrzeugs 1 verriegelt.

In Figur 3 ist zudem hinter dem Spannzylinder 9 eine Aufnahmeklaue 17 mit zwei, von hinten nach vorne zueinander verlaufenden Führungsflächen 18, 19 dargestellt. Ohne nähere Darstellung sind jedoch in vorteilhafter Weise zwei Aufnahmeklauen 17 und zwei Verriegelungsbolzen 21 vorhanden, die beidseitig bzw. jeweils links und rechts an einem Rahmen 22 und/oder dem Chassis 3 angeordnet werden können.

Diese beiden Aufnahmeklauen 17 sind vorzugsweise fest am Chassis 3 angebracht und weist hinten eine Aufnahmeöffnung 20 auf, durch die jeweils ein hinterer Verriegelungsbolzen 21 des Wechselaufbaus in die jeweilige Aufnahmeklaue 17 aufgenommen und dort verriegelt bzw. verspannt werden kann. Vom Wechselaufbau selbst ist in dieser Darstellung nur ein Rahmen 22 mit vorderen und hinteren Laschen 23, 24 zur Befestigung der vorderen und hinteren Verriegelungsbolzen 16, 21 gezeigt.

In Fig. 4 sind drei Darstellungen a, b, c mit verschiedenen Positionen 10, 10',10"des Spannkeils 10 zu sehen. In der Position der oberen Darstellung a verspannt der Spannkeil 10 den vorderen Verriegelungsbolzen 16 eines Wechselaufbaus. In der Position der mittleren Darstellung b ist die Verspannung gelöst, so dass der Verriegelungsbolzen 16 frei ist.

In der Position der unteren Darstellung c ist der Spannzylinder 9 vollständig eingezogen und ein Kniehebel 25, aus zwei Einzelhebeln 26, die mit einem Gelenk 28 verbunden sind, ist angehoben, wobei der Kniehebel 25 bzw. der vordere Einzelhebel 26 zudem eine Stirnseite 27 aufweist. Die Mitnahme des vorderen Einzelhebels 26 beim Einziehen des Spannzylinders 9 erfolgt über eine nicht näher dargestellte Langlochführung, die dem Kniehebel 25 einen Freilauf beim Übergang zwischen den Positionen der Darstellungen a und b verschafft. In der Darstellung c ist der vordere Verriegelungsbolzen 16 nicht mehr gezeichnet, was einem entfernten Wechselaufbau entspricht. Die Stirnseite 27, des vorderen Einzelhebels 26 kann dabei in der in Figur 4c) dargestellten, besonderen Variante der Erfindung in vorteilhafter Weise eine Auflage bzw. eine Kontaktfläche für einen Wechselaufbau und somit eine Angriffsstelle der durch den Kniehebel 25 gebildeten Hubeinheit am Wechselaufbau bilden.

Alternativ zu der dargestellten, vorgenannten besonderen Variante der Erfindung kann das Gelenk 28 z.B. zwei beidseits angeordnete Rollen (ohne nähere Darstellung) aufweisen, die die Auflage bzw. Kontaktflächen für den Wechselaufbau und somit die Angriffsstelle der durch den Kniehebel 25 gebildeten Hubeinheit am Wechselaufbau bilden, so dass in vorteilhafter Weise der Wechselaufbau auf/an diesen vorteilhaften Rollen abrollen und/oder ruhen kann.

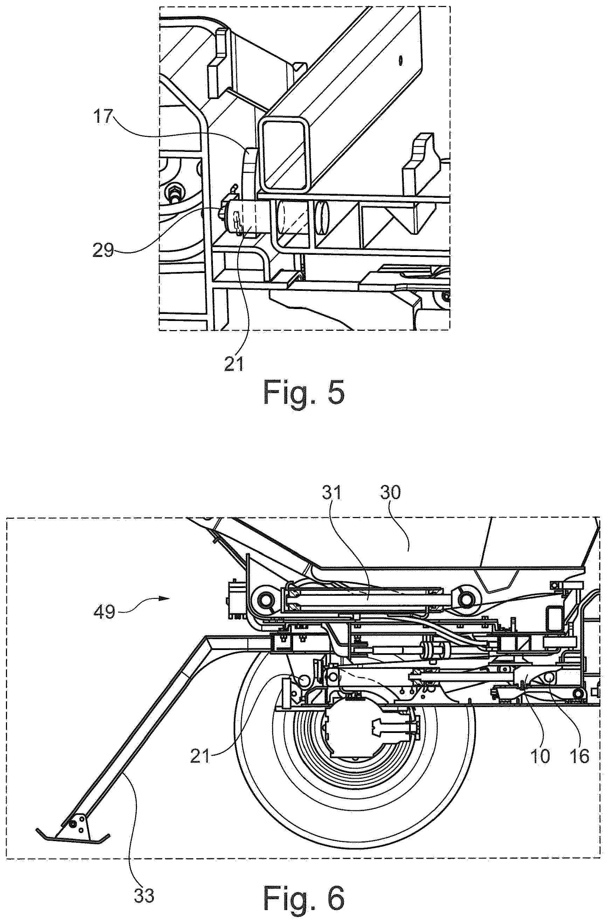

In Fig. 5 ist ein vorteilhafter Zentrierbolzen 21 abgebildet, der auf dem Wechselaufbau angebracht ist. Der Zentrierbolzen 41 erstreckt sich entlang der Längsachse des Wechselaufbaus und wird beidseitig von zwei Anschlägen 42 aufgenommen, die am Fahrzeug befestigt sind und wobei in Figur 5 lediglich einer der Anschläge 17 dargestellt ist. So wird in vorteilhafter Weise u.a. bei großer Querneigung ein seitliches Verrutschen des Wechselaufbaus verhindert. Die beidseitigen Anschläge 42 am Fahrzeugrahmen verhindern ein seitliches Verrutschen. Gleichzeitig dient der Zentrierbolzen als Auslöser für einen Sensor 29 zum Erkennen der verriegelten Position. Ein Verriegelungstaster 29 dient als der Sensor 29 zur Erfassung der verriegelten Position eines Wechselaufbaus und somit zur Erkennung, ob das Basisfahrzeug mit oder ohne Aufbau ist.

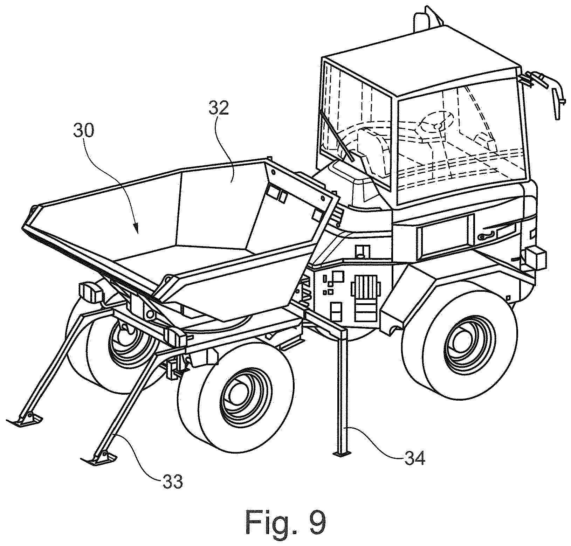

In den Figuren 6 bis 8 ist ein Wechselaufbau in Form eines Muldenaufbaus 30 teilweise, in den Fig. 9 und 9 in perspektivischer Ansicht ganz gezeigt. Ein Kippzylinder 31 ist Teil des Wechselaufbaus 30 und ermöglicht das Abkippen einer Mulde 32 des Muldenaufbaus 30.

Die Figuren 6 bis 10 dienen der Veranschaulichung des An- und Abbaus des Muldenaufbaus 30 am Basisfahrzeug 1. Der Hub des Aufbaus sowie dessen Verriegelung wird mit dem hydraulisch betriebenen Spannzylinder 9 realisiert. Hierzu kann der Fahrer in der Kabine mittels eines Schalters zwischen einem Fahrmodus und einem Wechselmodus umschalten. Im Fahrmodus wird der Spannzylinder durch hydraulisches Nachspannen innerhalb eines vorgegebenen Druckbereichs gehalten. Der Bedientaster 12 ist im Fahrmodus deaktiviert. Im Wechselmodus kann das Basisfahrzeug 1 nicht mehr manövriert werden. Das automatische Nachspannen wird deaktiviert und der Taster 12 wird aktiviert.

Im Fahrmodus ist der Spannzylinder 9 mit Druck beaufschlagt. Dadurch wird der Spannkeil 10 zwischen den Klemmblechen 15 und dem vorderen Verriegelungsbolzen 16 eingeklemmt. Durch die Keilform entsteht am Wechselaufbau 30 eine Kraftwirkung in negative z-Richtung, also nach unten, wodurch der Wechselaufbau 30 auch in X- Richtung nach vorne gedrückt wird. Der Wechselaufbau wird also über zwischen zwei beidseitig vorhandenen Aufnahmeklauen 17 und dem Spannkeil 10 spielfrei verspannt. Sollten die Verriegelungsbolzen 16, 21, die Aufnahmeklauen 17 oder der Spannkeil 10 mit der Zeit ausschlagen, so bleibt das Gesamtsystem spielfrei, da der Spannzylinder unter Druck steht und automatisch nachgespannt wird.

Beim Umschalten in den Wechselmodus bleibt die Situation unverändert, der Spannzylinder 9 wird jedoch nicht mehr nachgespannt. In dieser Situation werden zum Wechsel des Wechselaufbaus 30 die hinteren Stützen 33 am Wechselaufbau 30 angebracht, beispielsweise in eine nicht näher dargestellte Aufnahme eingeschoben oder vom Wechselaufbau ausgeklappt, wenn diese direkt am Wechselaufbau angeordnet sind.

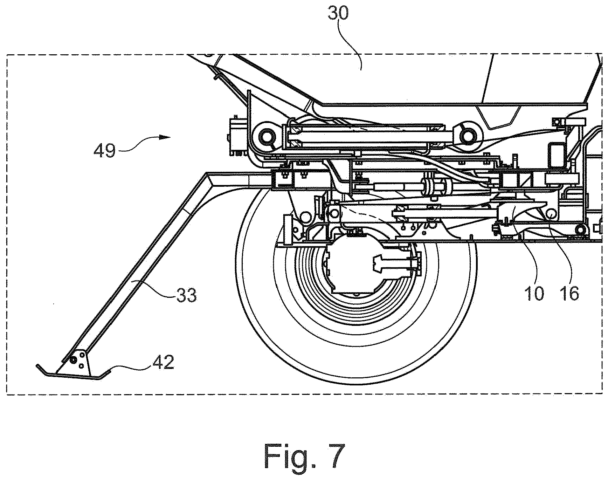

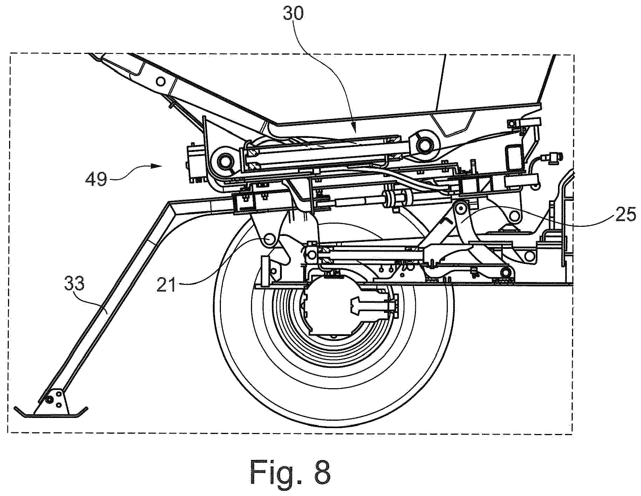

Wie in Fig. 7 dargestellt, wird dann im Wechselmodus der Bedientaster 12 betätigt, wodurch der Spannzylinder 9 eingezogen wird. Dabei gibt zunächst der Spannkeil 10 den vorderen Verriegelungsbolzen 16 frei. Sobald der Freilauf des Kniehebels 25 durchlaufen ist, wird dieser von Spannzylinder 9 mitgenommen und dadurch der Wechselaufbau 30 angehoben, was insbesondere in Fig. 8 dargestellt ist. Nunmehr werden vordere Stützen 34 am Wechselaufbau 30 angebracht, beispielsweise in eine nicht näher dargestellte Aufnahme eingeschoben. Diese Situation ist in Fig. 9 gezeigt.

Grundsätzlich ist es von Vorteil, die Stützen 33, 34 am Basisfahrzeug 1 und/oder am Wechselaufbau 30 mitzuführen, z.B. mit einem Fixiermechanismus wie einer Verrastung etc. und/oder in einem nicht näher dargestellten Aufbewahrungsraum bzw. Einschubfach oder dergleichen. Alternativ zum manuellen Anbringen und/oder Einstecken der Stützen 33, 34 kann dies auch halb-/automatisch mit einem Stützenantrieb, insb. mit hydraulischen und/oder elektrischen Aktuatoren wie z.B. Hydraulikzylinder oder Elektromotoren etc., verwirklicht werden. Entsprechendes kann auch mit einer optional vorzusehenden Längenverstellung mit Fixiermöglichkeit entweder manuell und/oder halb-/automatisch umgesetzt werden.

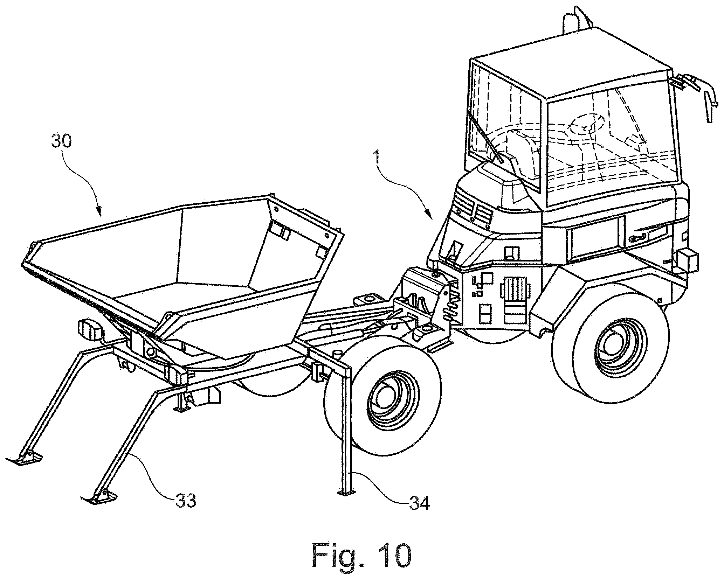

Wird jetzt der Kniehebel 25 durch Ausfahren des Spannzylinders abgesenkt, so liegt der Wechselaufbau auf seinen hinteren 33 und vorderen 34 Stützen und das.Basisfahrzeug 1 kann nach Aktivierung des Fahrmodus unter dem Wechselaufbau 30 hervorgefahren werden, wie in Fig. 10 erkennbar ist.

Die Aufnahme eines Wechselaufbaus 30 geschieht in umgekehrter Reihenfolge. Der Wechselaufbau 30 ist auf seinen Stützen 33,34 abgestellt. Der Spannzylinder 9 ist soweit ausgefahren, dass sich der Kniehebel 25 in der tiefsten Position befindet. Jetzt kann das Basisfahrzeug 1 unter den Wechselaufbau 30 gefahren werden.

In einer vorteilhaften Ausführungsform kann der Wechselaufbau über seitlich Leitbleche sowie vordere und hintere Anschläge verfügen (ohne nähere Darstellung). Diese seitlichen Leitbleche bringen in vorteilhafter Weise den Wechselaufbau in seitlicher Richtung in die richtige Position bezogen auf das Basisfahrzeug 1. Die vorderen und hinteren Anschläge begrenzen die Einfahrtiefe des Basisfahrzeugs 1 und sorgen so für die richtige Endposition in Richtung der Rückwärtsfahrt. Ist die Endposition zur Aufnahme des Wechselaufbaus 30 erreicht, so kann dieser aufgenommen werden.

Hierzu wird von der Bedienperson auf den Wechselmodus umgeschaltet und anschließend mittels des Bedientasters 12 der Spannzylinder eingezogen, wodurch der Wechselaufbau 30 angehoben wird. Jetzt werden die vorderen Stützen 34 entfernt und der Wechselaufbau durch Ausfahren des Spannzylinders 9 bei gleichzeitigem Absenken des Kniehebels 25 abgesenkt. Beim weiteren Ausfahren des Spannzylinders 9 wird der Wechselaufbau 30 durch den Spannkeil 10 und die Verriegelungsbolzen 16,21 am Basisfahrzeug 1 verriegelt. Durch die beim Absenken des Kniehebels 25 einsetzende Kippbewegung des Wechselaufbaus 30 werden die hinteren Stützen 33 entlastet und können so ebenfalls entfernt werden.

Nunmehr muss die Bedienperson noch die hydraulischen Verbindungen, die vorzugsweise als Schnellkupplungen ausgestaltet sind, und die elektrischen Verbindungen, die vorzugsweise als Steckverbindungen ausgeführt sind, herstellen. Jetzt kann in den Fahrmodus zurückgeschaltet werden und das Basisfahrzeug 1 ist mit dem aufgenommen Wechselaufbau 30 einsatzfähig.

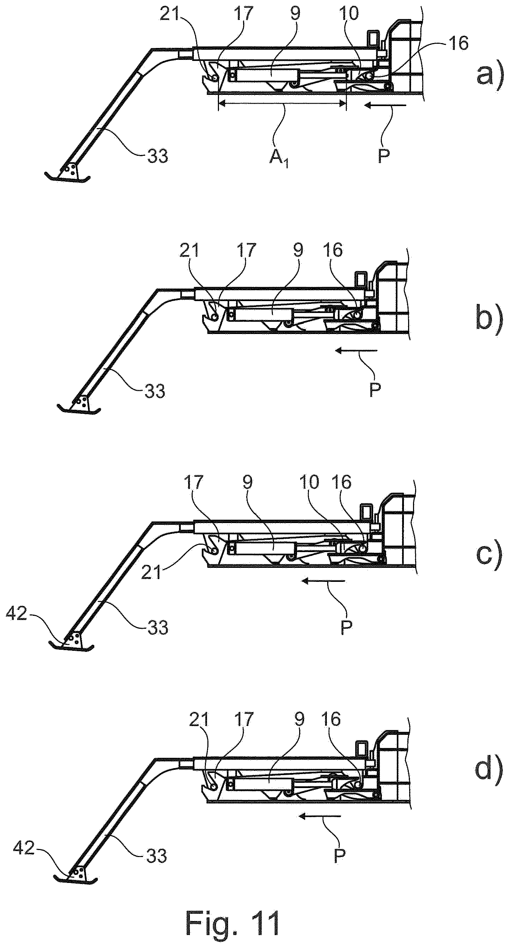

Darüber hinaus sind in den Figuren 11 bis 15 nähere Details des Wechselprozesses, insb. des Abkuppelns, bzw. dessen einzelne Verfahrensstufen schematisch dargestellt und nachfolgend stichwortartig kurz beschrieben. Die nachfolgenden Erläuterungen bzw. Beschreibungen beziehen sich auf das dargestellte Ausführungsbeispiel, d.h. Basisfahrzeug 1 mit Knick-Lenkung 5 und Muldenaufbau 30 als Wechselaufbau 30. Diese Erläuterungen bzw. Beschreibungen sind und sollen jedoch allgemeiner Natur sein und auch für (alle) andere Basisfahrzeuge 1 und Wechselaufbauten 30 bezogen werden können, d.h. auf Vorderrad-, Hinterrad-, Allrad- oder Panzerlenkung und/oder Mulden-, Tank-, Betonmischer-Aufbauten oder dergleichen:

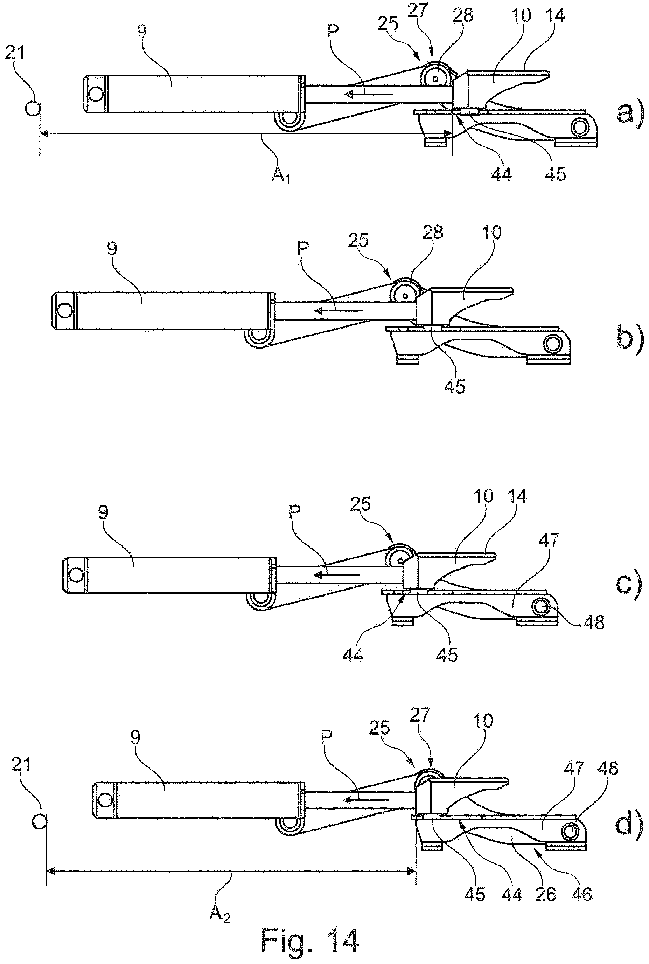

Fig. 11a) bzw. Fig. 14a) bzw. Fig. 4a) bzw. Fig. 6: Wechselaufbau 30 (nicht näher dargestellt) bzw. Plattform/Tragrahmen 49 des Wechselaufbaus 30 abstellen: Der Vorgang beginnt/erfolgt im Wesentlichen in einer (unteren) verriegelten/verspannten/fixierten Grundposition des Wechselaufbaus 30, wobei zwei der Kupplungselemente 21, 10, 16, 17, d.h. gemäß Fig. 11a) der hintere Verriegelungsbolzen 21 und der Spann-Keil 10 einen Abstand A1 aufweisen, optionales bzw. vorteilhaftes Anbringen der hinteren Stützen 33 am Wechselaufbau 30 bzw. dessen Tragrahmen 49, Entriegelung, wobei der Spann-Keil 10 sich mit Hilfe des Antriebs 9 bzw. Hydraulikzylinders 9 entlang eines Freilaufes 44 bzw. Langlochs 44 nach links entlang des Pfeiles P bewegt, wobei insb. Fig. 14a) verdeutlicht, dass ein Mitnehmerelement 45 bzw. Bolzen 45 in dem Freilauf 44 bzw. Langloch 44 frei bewegbar ist, so dass ein Schlitten 46 bzw. dessen Basiselement 47 unverstellt bzw. unbeweglich bleibt.

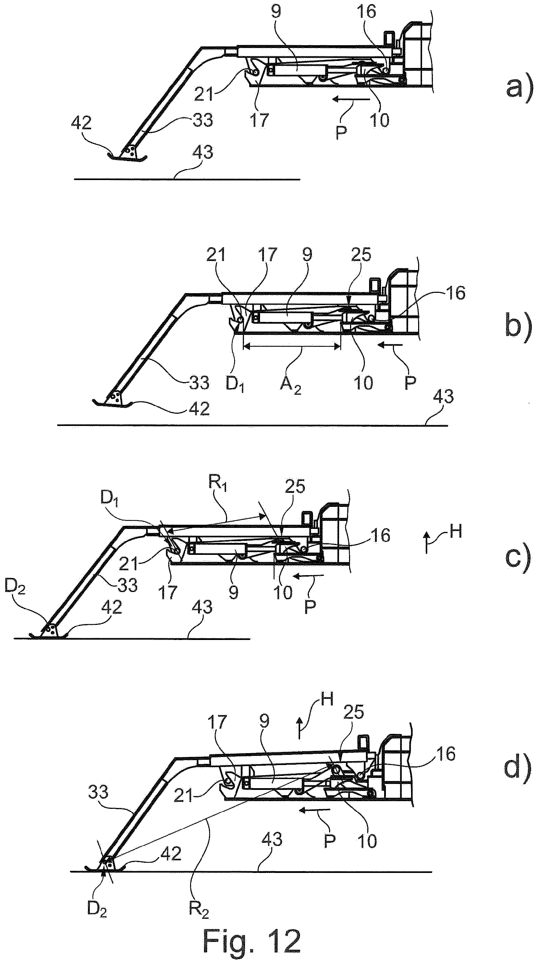

Fig. 11b) bis 12b) bzw. Fig. 14a) bis 14d): Der Spann-Keil 10 bewegt sich mit Hilfe des Antriebs 9 bzw. Hydraulikzylinders 9 weiter entlang des Freilaufes 44 bzw. Langlochs 44 nach links entlang des Pfeiles P, bis wie Fig. 12b) bzw. 14d) verdeutlichen, dass das Mitnehmerelement 45 bzw. der Bolzen 45 am Ende des Freilaufs 44 bzw. Langlochs 44 anschlägt und ab nun nicht hierin nicht mehr bewegbar ist, wobei der Schlitten 46 bzw. dessen Basiselement 47 weiterhin unverstellt bzw. unbeweglich bleibt, wobei die entsprechenden zwei Kupplungselemente 21, 10, 16 bzw. der hintere Verriegelungsbolzen 21 und der Spann-Keil 10 oder alternativ (nicht eingezeichnet) zum vorderen Bolzen 16 einen Abstand A2 aufweisen, wobei der Abstand A2 um einen den (bisherigen) Hub des Antriebs 9 bzw. Hydraulikzylinders 9 kleiner als der Abstand A1 ist, der Wechselaufbau 30 bzw. dessen Tragrahmen 49 ist nun entriegelt.

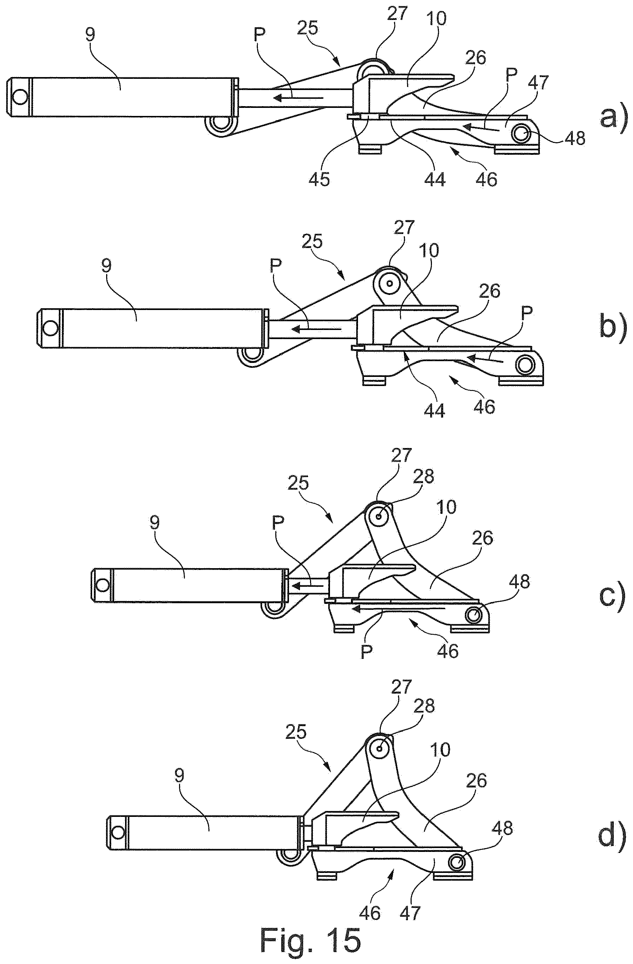

Fig. 12c) bzw. Fig. 15a): Der Spann-Keil 10 bzw. eine Kolbenstange des Antriebs 9 bzw. Zylinders 9 bewegt sich weiter entlang des Pfeiles P, das am Freilauf 44 angeschlagene Mitnehmerelement 45 bzw. der Bolzen 45 nimmt ein Basiselement 47 eines Schlittens 46 mit, wobei der Schlitten 46 mit einem Gelenk 48 mit dem Kniehebel 25 verbunden ist, so dass der Kniehebel 25 gegenüber dem Schlitten 46 verdrehbar ist, der Kniehebel 25 bzw. dessen Komponenten heben teilweise in vertikaler Richtung H ab, insb. eine Stirnseite 27, die als Kontaktfläche 27 und/oder Angriffselement 27 ausgebildet ist, der Wechselaufbau 30 bzw. dessen Tragrahmen 49 drehen um eine Drehachse D1 mit einem ersten Radius R1, die hintere Stütze bzw. Stützen 33 werden ebenfalls um die Drehachse D1 verdreht und senken sich nach unten Richtung Boden 43, wobei optional die Stütze 33 auch eine Längenverstellung mit Fixiermöglichkeit (nicht dargestellt), z.B. geklemmt und/oder verrastet, aufweisen kann, um in vorteilhafter Weise (grob) an die Höhe bzw. den Abstand zum Boden 43 anpassbar zu sein, d.h. dass der Keil 10 am Ende des Langlochs 44 angekommen war und ab diesem Punkt/Zustand anschließend den Schlitten 46 mit dem Kniehebel 25 mit nach links bzw. entlang Pfeil P nimmt, wobei das Knie 25 sich nun nach oben bewegt, bis dieser an einer Kontaktfläche des Wechselaufbaus 30 bzw. dessen Tragrahmen 49 anschlägt, so dass sich dieser um die Drehachse D1 dreht bzw. verkippt wird.

Fig. 12d) bzw. Fig. 15a): Der Spann-Keil 10 bzw. die Kolbenstange des Antriebs 9 bzw. Zylinders 9 bewegt sich weiter entlang des Pfeiles P, das am Freilauf 44 angeschlagene Mitnehmerelement 45 bzw. der Bolzen 45 nimmt das Basiselement 47 des Schlittens 46 weiterhin mit, die Bodenstützen 33 berühren den Boden 43 bzw. stützen sich am Boden 43 ab, so dass der Wechselaufbau 30 bzw. dessen Tragrahmen 49 sich ab nun um eine zweite Drehachse D2 mit einem zweiten Radius R2 drehen, d.h. mittels einer Kufe 42 bzw. Bodenkontaktfläche, der Bolzen 21 wird aus der Aufnahme 21 ausgehebelt bzw. hebt in vertikaler Richtung H ab, wobei optional bzw. als vorteilhafte Alternative die Kufe 42 auch ohne freischwingenden separaten Fuß (vgl. Abbildung) ausgebildet werden kann und wobei in vorteilhafter Weise stattdessen z.B. eine fest angebrachte, insb. gebogene Bodenplatte der Kufe 42 an der Stütze 33 angeordnet wird, wobei sich auch hierdurch eine Abrollbewegung bzw. eine Drehung um eine entspr. am Boden 43 angeordnete, vorhandene Drehachse D2 ergeben wird, d.h. an der (gebogenen) Bodenplatte bzw. dessen Kontaktfläche (nicht dargestellt),

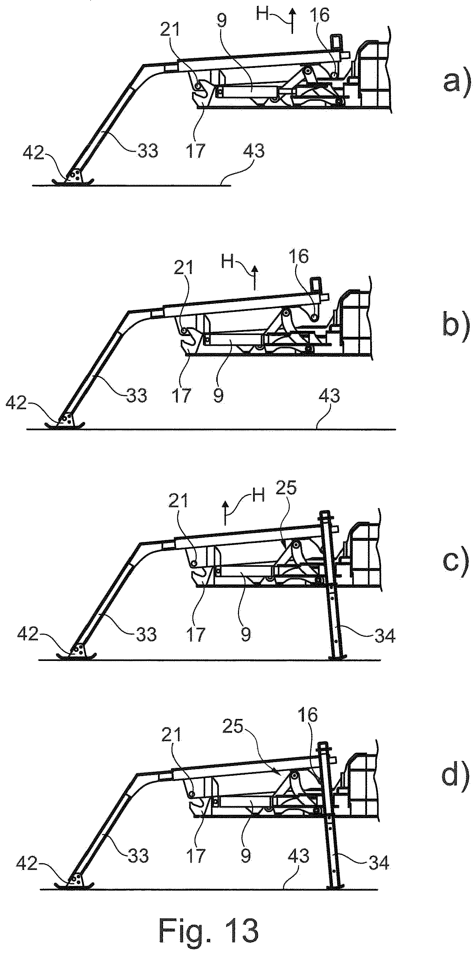

Fig. 13a) bis 13b) bzw. Fig. 15b) bis 15d) bzw. Fig. 4c): Der Spann-Keil 10 bzw. die Kolbenstange des Antriebs 9 bzw. Zylinders 9 bewegt sich weiter entlang des Pfeiles P, das am Freilauf 44 angeschlagene Mitnehmerelement 45 bzw. der Bolzen 45 nimmt das Basiselement 47 des Schlittens 46 weiterhin mit, d.h. der Hubmechanismus hebt den Aufbau bis in die Endlage an.

Fig. 13c) bis 13d) bzw. Fig. 15c) bis 15d) bzw. Fig. 9: Die vorderen Stützen 34 werden seitlich eingesteckt bzw. in Stützposition gebracht, anschließend werden die seitlichen Stützen 34 auf die richtige Länge gebracht/verstellt und fixiert, z.B. geklemmt und/oder verrastet, anschließend kann der Spannzylinder 9 wieder nach vorne fahren, d.h. entgegen dem Pfeil P, wobei sich der Aufbau 30 senkt (ohne nähere Darstellung), bis die seitlichen Stützen 34 vollen Kontakt zum Boden haben, ab diesem Zeitpunkt kann der Aufbau 30 als abgestellt bezeichnet werden, das Basisfahrzeug 1 kann sich entfernen bzw. wegfahren.

Das Aufnehmen des Wechselaufbaus 30 erfolgt in entspr. umgekehrter Reihenfolge. Weitere Details wie eine elektr. Kontaktsicherung bzw. Anwesenheitskontrolle des Wechselaufbaus 30 und/oder der Verriegelung etc. mittels Sensorik, Schaltern 12 bzw. Stellgliedern oder dergleichen wird an dieser Stelle nicht näher erläutert, können jedoch in vorteilhafter Weise ergänzt bzw. vorgesehen werden.

Von großem Vorteil beim Wechselsystem gemäßder Erfindung ist zudem, dass am Wechselaufbau 30 keine aktiven bzw. Energie verbrauchenden Komponenten befinden, so dass die Energie für das Wechseln, d.h. Abkoppeln und Ankoppeln, bzw. der Antrieb nicht nur gemeinsam mit einem einzigen Antrieb, sondern auch ausschließlich am Basisfahrzeug realisiert werden kann. Dementsprechend kann z.B. auf das Hydrauliksystem und/oder elektrische Antriebssystem des Basisfahrzeug 1 zurückgegriffen werden.

### Bezugszeichenliste

| | | | |
|---|---|---|---|
| 1 | Basisfahrzeug | 25 | Kniehebel |
| 2 | Fahrerkabine | 26 | Einzelhebel |
| 3 | Chassis | 27 | Stirnseite |
| 4 | Laufrad | 28 | Gelenk |
| 5 | Knick-/Lenkung | 29 | Verriegelungstaster |
| 6 | Chassis-Teil | 30 | Wechselaufbau |
| 7 | Chassis-Teil | 31 | Kippzylinder |
| 8 | Knickgelenk | 32 | Mulde |
| 9 | Spannzylinder | 33 | Hintere Stütze |
| 10 | Spannkeil | 34 | Vordere Stütze |
| 11 | Bolzen | 41 | Zentrierbolzen |
| 12 | Bedientaster | 42 | Kufe |
| 13 | Spannfläche | 43 | Boden |
| 14 | Oberseite | 44 | Langloch/Freilauf |
| 15 | Klemmblech | 45 | Bolzen |
| 16 | Vorderer Verriegelungsbolzen | 46 | Schlitten |
| | | 47 | Basiselement |
| 17 | Aufnahmeklaue | 48 | Gelenk |
| 18 | Führungsfläche | 49 | Tragrahmen |
| 19 | Führungsfläche | | |
| 20 | Aufnahmeöffnung | A | Abstand |
| 21 | Hintere Verriegelungsbolzen | D | Drehachse |
| | | H | Heben/Heberichtung |
| 22 | Rahmen | P | Pfeil/Verstellrichtung |
| 23 | Lasche | R | Radius |
| 24 | Lasche | | |

## Patentansprüche

1. Baufahrzeug mit einem Basisfahrzeug (1) und einem Aufbau, insbesondere einem Muldenaufbau mit einer Kippeinheit, wobei das Basisfahrzeug eine Fahrereinheit, insbesondere mit einer Fahrerkabine (2), und einer Lenkeinheit zum Lenken des Basisfahrzeugs, insb. einer Knicklenkung (5) mit einem Gelenk (8), Achsschenkellenkung, Panzerlenkung, Hinterrad-, Vorderrad- oder Allradlenkung, aufweist, wobei insbesondere das Gelenk (8) zwischen zwei, relativ zueinander verschwenkbaren Fahrzeugeinheiten (6, 7) des Basisfahrzeugs (1) angeordnet ist, wobei das Basisfahrzeug (1) eine fahrzeugseitige Kupplungseinheit (9, 10, 11) zum An- und/oder Abkuppeln eines Wechselaufbaus (30) mit einem oder mehreren fahrzeugseitigen Kupplungselementen (10, 17) aufweist und wobei ein Wechselaufbau (30) vorgesehen ist, der ein oder mehrere aufbauseitige Kupplungselemente (16, 21) zum Ankuppeln des Wechselaufbaus (30) an das Basisfahrzeug (1) umfasst, wobei wenigstens eine erste Drehachse (D1) vorgesehen ist, um die der Wechselaufbau (30) während dem An- und/oder Abkuppeln mit einem ersten Radius (R1) verdrehbar ist, wobei eine Hubvorrichtung (25) mit einem Hubantrieb (9) zum Anheben des Wechselaufbaus (30 vorgesehen ist, wobei das Basisfahrzeug (1) eine als Ent-/ Verriegelungs- und/oder Spanneinheit (9) ausgebildete Antriebseinheit und wenigstens ein erstes fahrzeugseitiges Kupplungselement (10) der Kupplungseinheit (9, 10, 11) aufweist, dessen Stellung durch die Antriebseinheit (9) veränderbar ist, wobei die als Ent-/ Verriegelungs- und/oder Spanneinheit ausgebildete, insbesondere lineare Antriebseinheit (9) auch als der Hubantrieb der Hubvorrichtung ausgebildet ist, **dadurch gekennzeichnet, dass** ein hinteres fahrzeugseitiges Kupplungselement (17) eine von hinten nach vorne abwärts verlaufend Führungsfläche (18) und ein vorderes fahrzeugseitiges Kupplungselement (10) eine von vorne nach hinten abwärtsverlaufende Ent-/Verriegelungs- und/oder Spannfläche (13) aufweist und/oder dass in einem am Basisfahrzeug (1) verriegelten und/oder verspannten Zustand des Wechselaufbaus (30) ein hinteres aufbauseitiges Kupplungselement (21) die abwärts verlaufende Führungsfläche (18) des hinteren fahrzeugseitigen Kupplungselementes (17) und ein vorderes aufbauseitiges Kupplungselement (16) die abwärts verlaufende Ent-/Verriegelungs- und/oder Spannfläche (13) des vorderen fahrzeugseitigen Kupplungselementes (19) untergreift.

2. Baufahrzeug nach Anspruch 1 **dadurch gekennzeichnet, dass** die Antriebseinheit eine lineare Antriebseinheit, insbesondere ein hydraulischer Hubzylinder (9) ist, wobei ein Abstand (A) wenigstens zweier fahrzeugseitiger oder aufbauseitiger Kupplungselemente (10, 16, 21) zueinander durch die Antriebseinheit (9) veränderbar ist.

3. Baufahrzeug nach einem der vorgenannten Ansprüche, **dadurch gekennzeichnet, dass** eine Verstell- und/oder Antriebsrichtung der linearen Antriebseinheit (9) und/oder des ersten fahrzeugseitigen Kupplungselementes (10) parallel zur Längsrichtung und/oder Fahrtrichtung des Basisfahrzeugs (1), insbesondere in Geradeausfahrt, gerichtet ist.

4. Baufahrzeug nach einem der vorgenannten Ansprüche, **dadurch gekennzeichnet, dass** die Hubvorrichtung (25) wenigstens ein eine Kontaktfläche aufweisendes Angriffselement (27) zum Anordnen am Wechselaufbau (30) und/oder zum Anheben des Wechselaufbaus (30) in einer Hubposition umfasst, wobei insbesondere der Schwerpunkt des Wechselaufbaus (30) zumindest in der Hubposition zwischen der Kontaktfläche des Angriffselements (27) und der ersten Drehachse (21, D1) angeordnet ist, und/oder dass die Hubvorrichtung (25) in der Hubposition zum Anheben des Wechselaufbaus (30) mit einem bezogen auf die in die erste Fahrtrichtung, insbesondere die Vorwärtsfahrtrichtung mit einer vor dem Aufbau angeordneten Fahrereinheit und/oder Fahrerkabine (2), vor dem Schwerpunkt des Wechselaufbaus (30) angeordneten Angriffselement (27) an diesem Wechselanbau (30) angreift.

5. Baufahrzeug nach einem der vorgenannten Ansprüche, **dadurch gekennzeichnet, dass** die Hubvorrichtung eine Hebelanordnung(26), insbesondere einen Kniehebel (25), umfasst, wobei insbesondere die Hebelanordnung(26) und/oder der Kniehebel (25) die Kontaktfläche und/oder das Angriffselement (27) aufweist.

6. Baufahrzeug nach einem der vorgenannten Ansprüche, **dadurch gekennzeichnet, dass** wenigstens eine erste Antriebsphase der insbesondere als Hubantrieb ausgebildeten Antriebseinheit (9) als Ent-/Verriegelungs- und/oder Spannphase ausgebildet ist und dass eine zweite Antriebsphase der insbesondere als Hubantrieb ausgebildeten Antriebseinheit (9) als Hebe- oder Senkphase der Hubvorrichtung ausgebildet ist.

7. Baufahrzeug nach einem der vorgenannten Ansprüche, **dadurch gekennzeichnet, dass** ein Freilauf über eine Freilaufstrecke, insbesondere in Form einer Langlochführung mit einem mit der Hebelanordnung (25, 26) verbundenen Anschlagelement, vorgesehen ist, wobei die Freilaufstrecke größer oder gleich ist wie eine zur Verspannung und/oder Verriegelung vorgesehene Abstandsänderung zwischen zwei zur Verspannung und/oder Verriegelung des Wechselaufbaus (30) vorgesehene Kupplungselemente.

8. Baufahrzeug nach einem der vorgenannten Ansprüche, **dadurch gekennzeichnet, dass** wenigstens eines der fahrzeugseitigen und/oder aufbauseitigen Kupplungselemente (10, 16, 17, 21) eine gegenüber der Längsachse und/oder Fahrtrichtung des Basisfahrzeugs (1) schräg verlaufende Ent-/Verriegelungs- und/oder Spannfläche (13) aufweist, wobei insbesondere wenigstens eines der fahrzeugseitigen und/oder aufbauseitigen Kupplungselemente (10, 16, 17, 21) als Ent-/Verriegelungs- und/oder Spannkeil (10) ausgebildet ist.

9. Baufahrzeug nach einem der vorgenannten Ansprüche, **dadurch gekennzeichnet, dass** wenigstens eines der fahrzeugseitigen Kupplungselemente (10, 17) eine zu einer in Bezug auf die Fahrereinheit und/oder die Fahrerkabine (2) abgewandten Seite, insbesondere zu einer Rückseite, des Basisfahrzeugs (1) gerichtete Aufnahmeöffnung (20) zur Aufnahme wenigstens eines der aufbauseitigen Kupplungselemente (21) aufweist.

10. Baufahrzeug nach einem der vorgenannten Ansprüche, **dadurch gekennzeichnet, dass** das fahrzeugseitige Kupplungselement (17) mit Aufnahmeöffnung (20) zwei schräg in Bezug auf eine erste Fahrtrichtung, insbesondere einer Vorwärtsfahrtrichtung mit einer vor dem Aufbau angeordneten Fahrereinheit und/oder Fahrerkabine (2), zueinander hin verlaufende Führungsflächen (18, 19) aufweist.

11. Baufahrzeug nach einem der vorgenannten Ansprüche, **dadurch gekennzeichnet, dass** wenigstens eine zweite Drehachse (D2) vorgesehen ist, um die der Wechselaufbau (30) während der An- und/oder Abkuppel-Phase mit einem zweiten Radius (R2) verdrehbar ist, wobei der Wechselaufbau (30) in einer ersten Drehphase um die erste Drehachse (D1) drehbar und in einer zweiten Drehphase um die zweite Drehachse (D2) drehbar ist.

12. Baufahrzeug nach einem der vorgenannten Ansprüche, **dadurch gekennzeichnet, dass** der erste Radius (R1) der ersten Drehachse (D1) kleiner als der zweite Radius (R2) der zweiten Drehachse (D2) ist.

13. Baufahrzeug nach einem der vorgenannten Ansprüche, **dadurch gekennzeichnet, dass** die erste Drehachse (D1) als Bolzenelement (21) des Wechselaufbaus (30) und/oder als Ent-/ Verriegelungs- und/oder Spannelement der Ent-/Verriegelungs- und/oder Spanneinheit (9) ausgebildet ist und/oder dass die zweite Drehachse (D2) als Stützelement (42) des Wechselaufbaus (30) ausgebildet ist.

14. Baufahrzeug nach einem der vorgenannten Ansprüche, **dadurch gekennzeichnet, dass** eine Sensoreinheit (29), insbesondere in Form eines durch ein aufbauseitiges Kupplungselement beweglichen, mechanischen Tasters, zur Erkennung eines angekuppelten Wechselaufbaus (30) vorgesehen ist und/oder dass das Basisfahrzeug (1) eine Kontrolleinheit für eine von der Art des angekuppelten Wechselaufbaus abhängige Kontrolle der Fahrtgeschwindigkeit und/oder für eine Kontrolle der Fahrtgeschwindigkeit abhängig davon, ob ein Wechselaufbau angekuppelt ist oder nicht, aufweist.

15. Baufahrzeug nach einem der vorgenannten Ansprüche, **dadurch gekennzeichnet, dass** ein außerhalb der Fahrereinheit angeordnetes Bedienelement (12) für die Bedienung der Ent-/ Verriegelungs- und/oder Spanneinheit (9) vorgesehen ist.

16. Baufahrzeug nach einem der vorgenannten Ansprüche, **dadurch gekennzeichnet, dass** die Kontrolleinheit wenigstens zwei Betriebsmodi, wie einen Fahrmodus und einen Wechselmodus aufweist, wobei im Fahrmodus eine Aktivierung wenigstens einer Fahrfunktion, wie der automatischen Nachspannung der Ent-/ Verriegelungs- und/oder Spanneinheit (9) und/oder der Kontrolle der Fahrtgeschwindigkeit und/oder eine Deaktivierung einer Wechselfunktion, wie die Sperrung des außerhalb der Fahrereinheit angeordneten Bedienelementes und/oder im Wechselmodus eine Deaktivierung einer Fahrfunktion und/oder eine Aktivierung einer Wechselfunktion wie die Freigabe des außerhalb der Fahrereinheit angeordneten Bedienelementes vorgesehen ist.

17. Verfahren zum Betreiben eines Baufahrzeugs und/oder Basisfahrzeug (1) mit/für einen Aufbau, insbesondere einem Muldenaufbau mit einer Kippeinheit, wobei das Basisfahrzeug eine Fahrereinheit, insbesondere mit einer Fahrerkabine (2), und einer Lenkeinheit zum Lenken des Basisfahrzeugs verwendet, wobei das Basisfahrzeug (1) eine fahrzeugseitige Kupplungseinheit (9, 10, 11) zum An- und/oder Abkuppeln eines Wechselaufbaus (30) mit einem oder mehreren fahrzeugseitigen Kupplungselementen (10, 17) verwendet und wobei ein Wechselaufbau (30) verwendet wird, der ein oder mehrere aufbauseitige Kupplungselemente (16, 21) zum Ankuppeln des Wechselaufbaus. (30) an das Basisfahrzeug (1) verwendet, wobei wenigstens eine erste Drehachse verwendet wird, um die der Wechselaufbau (30) während dem An- und/oder Abkuppeln mit einem ersten Radius verdreht wird, wobei eine Hubvorrichtung (25) mit einem Hubantrieb (9) zum Anheben des Wechselaufbaus (30 verwendet wird, wobei das Basisfahrzeug (1) eine als Ent-/ Verriegelungs- und/oder Spanneinheit (9) ausgebildete Antriebseinheit und wenigstens ein erstes fahrzeugseitiges Kupplungselement (10) der Kupplungseinheit (9, 10, 11) verwendet, dessen Stellung durch die Antriebseinheit (9) verändert wird, **dadurch gekennzeichnet, dass** die als Ent-/ Verriegelungs- und/oder Spanneinheit ausgebildete, insbesondere lineare Antriebseinheit (9) auch als der Hubantrieb der Hubvorrichtung ausgebildet wird, wobei ein hinteres fahrzeugseitiges Kupplungselement (17) eine von hinten nach vorne abwärts verlaufend Führungsfläche (18) und ein vorderes fahrzeugseitiges Kupplungselement (10) eine von vorne nach hinten abwärtsverlaufende Ent-/Verriegelungs- und/oder Spannfläche (13) aufweist und/oder dass in einem am Basisfahrzeug (1) verriegelten und/oder verspannten Zustand des Wechselaufbaus (30) ein hinteres aufbauseitiges Kupplungselement (21) die abwärts verlaufende Führungsfläche (18) des hinteren fahrzeugseitigen Kupplungselementes (17) und ein vorderes aufbauseitiges Kupplungselement (16) die abwärts verlaufende Ent-/Verriegelungs- und/oder Spannfläche (13) des vorderen fahrzeugseitigen Kupplungselementes (19) untergreift.

18. Verfahren nach dem vorgenannten Anspruch 17, **dadurch gekennzeichnet, dass** wenigstens eine erste Antriebsphase der insbesondere als Hubantrieb ausgebildeten Antriebseinheit (9) als Ent-/Verriegelungs- und/oder Spannphase ausgebildet wird und dass eine zweite Antriebsphase der insbesondere als Hubantrieb ausgebildeten Antriebseinheit (9) als Hebe- oder Senkphase der Hubvorrichtung ausgebildet wird.

19. Verfahren nach einem der vorgenannten Ansprüche 17 oder 18, **dadurch gekennzeichnet, dass** wenigstens eine zweite Drehachse (D2) verwendet wird, um die der Wechselaufbau (30) während der An- und/oder Abkuppel-Phase mit einem zweiten Radius (R2) verdreht wird, wobei der Wechselaufbau (30) in einer ersten Drehphase um die erste Drehachse (D1) dreht und in einer zweiten Drehphase um die zweite Drehachse (D2) dreht, wobei insbesondere der erste Radius (R1) der ersten Drehachse (D1) kleiner als der zweite Radius (R2) der zweiten Drehachse (D2) ausgebildet wird und/oder dass die erste Drehachse (D1) als Ent-/ Verriegelungs- und/oder Spannelement (21) der Ent-/Verriegelungs- und/oder Spanneinheit (9) ausgebildet wird und/oder dass die zweite Drehachse (D2) als Stützelement (42) des Wechselaufbaus (30) ausgebildet wird.

## Claims

1. Construction vehicle having a base vehicle (1) and having a body, in particular a bed body with a tipping unit, wherein the base vehicle has a driver's unit, in particular with a driver's cab (2), and a steering unit for steering the base vehicle, in particular an articulated steering system (5) with a joint (8), kingpin steering system, skid steering system, rear-wheel steering system, front-wheel steering system or all-wheel steering system, wherein in particular the joint (8) is arranged between two vehicle units (6, 7) of the base vehicle (1) that are pivotable relative to one another, wherein the base vehicle (1) has a vehicle-side coupling unit (9, 10, 11) for coupling and/or decoupling of an interchangeable body (30), which has one or more vehicle-side coupling elements (10, 17), and wherein provision is made of an interchangeable body (30) which comprises one or more body-side coupling elements (16, 21) for coupling of the interchangeable body (30) to the base vehicle (1), wherein provision is made of at least one first pivot (D1), around which the interchangeable body (30) is rotatable at a first radius (R1) during the coupling and/or decoupling, wherein provision is made of a lifting device (25) with a lifting drive (9) for lifting the interchangeable body (30), wherein the base vehicle (1) has a drive unit, which is designed as an unlocking/locking and/or tensioning unit (9), and at least one first vehicle-side coupling element (10) of the coupling unit (9, 10, 11), the position of which is able to be changed by the drive unit (9), wherein the, in particular linear, drive unit (9) designed as an unlocking/locking and/or tensioning unit is also designed as the lifting drive of the lifting device, **characterized in that** a rear vehicle-side coupling element (17) has a guide surface (18) extending downwards from the rear forwards, and a front vehicle-side coupling element (10) has an unlocking/locking and/or tensioning surface (13) extending downwards from the front rearwards, and/or **in that**, in a state of the interchangeable body (30) in which it is braced and/or locked to the base vehicle (1), a rear body-side coupling element (21) engages below the downwardly extending guide surface (18) of the rear vehicle-side coupling element (17) and a front body-side coupling element (16) engages below the downwardly extending unlocking/locking and/or tensioning surface (13) of the front vehicle-side coupling element (19).

2. Construction vehicle according to Claim 1, **characterized in that** the drive unit is a linear unit, in particular a hydraulic lifting cylinder (9), wherein a distance (A) of at least two vehicle-side or body-side coupling elements (10, 16, 21) from one another is able to be varied by the drive unit (9).

3. Construction vehicle according to either of the preceding claims, **characterized in that** an adjustment direction and/or drive direction of the linear drive unit (9) and/or of the first vehicle-side coupling element (10) is directed parallel to the longitudinal direction and/or direction of travel of the base vehicle (1), in particular during straight-ahead travel.

4. Construction vehicle according to one of the preceding claims, **characterized in that** the lifting device (25) comprises at least one engagement element (27), having a contact surface, for arrangement on the interchangeable body (30) and/or for lifting of the interchangeable body (30) in a lifting position, wherein in particular the centre of gravity of the interchangeable body (30), at least in the lifting position, is situated between the contact surface of the engagement element (27) and the first pivot (21, D1), and/or **in that** the lifting device (25), in the lifting position, for lifting of the interchangeable body (30), acts on the interchangeable body (30) by way of an engagement element (27) which, in relation to the first direction of travel, in particular the forward direction of travel with a driver's unit and/or driver's cab (2) arranged in front of the body, is arranged in front of the centre of gravity of said interchangeable body (30).

5. Construction vehicle according to one of the preceding claims, **characterized in that** the lifting device comprises a lever arrangement (26), in particular a knee lever (25), wherein in particular the lever arrangement (26) and/or the knee lever (25) has the contact surface and/or the engagement element (27).

6. Construction vehicle according to one of the preceding claims, **characterized in that** at least one first drive phase of the drive unit (9), which is designed in particular as a lifting drive, is configured as an unlocking/locking and/or tensioning phase, and **in that** a second drive phase of the drive unit (9), designed in particular as a lifting drive, is configured as a lifting or lowering phase of the lifting device.

7. Construction vehicle according to one of the preceding claims, **characterized in that** provision is made of a free-running section over a free-running distance, in particular in the form of a slot guide with a stop element which is connected to the lever arrangement (25, 26), wherein the free-running distance is greater than or equal to a change in distance, intended for bracing and/or locking, between two coupling elements provided for bracing and/or locking of the interchangeable body (30) .

8. Construction vehicle according to one of the preceding claims, **characterized in that** at least one of the vehicle-side and/or body-side coupling elements (10, 16, 17, 21) has an unlocking/locking and/or tensioning surface (13) which extends obliquely in relation to the longitudinal axis and/or direction of travel of the base vehicle (1), wherein in particular at least one of the vehicle-side and/or body-side coupling elements (10, 16, 17, 21) is designed as an unlocking/locking and/or tensioning wedge (10).

9. Construction vehicle according to one of the preceding claims, **characterized in that** at least one of the vehicle-side coupling elements (10, 17) has a receiving opening (20) which is directed towards a side which is remote in relation to the driver's unit and/or the driver's cab (2), in particular towards a rear side, of the base vehicle (1) and which serves for receiving at least one of the body-side coupling elements (21).

10. Construction vehicle according to one of the preceding claims, **characterized in that** the vehicle-side coupling element (17) with receiving opening (20) has two guide surfaces (18, 19) which extend obliquely towards one another in relation to a first direction of travel, in particular a forward direction of travel with a driver's unit and/or driver's cab (2) arranged in front of the body.

11. Construction vehicle according to one of the preceding claims, **characterized in that** provision is made of at least one second pivot (D2), around which the interchangeable body (30) is rotatable at a second radius (R2) during the coupling and/or decoupling phase, wherein the interchangeable body (30) is rotatable around the first pivot (D1) during a first rotational phase and is rotatable around the second pivot (D2) during a second rotational phase.

12. Construction vehicle according to one of the preceding claims, **characterized in that** the first radius (R1) associated with the first pivot (D1) is smaller than the second radius (R2) associated with the second pivot (D2).

13. Construction vehicle according to one of the preceding claims, **characterized in that** the first pivot (D1) is designed as a bolt element (21) of the interchangeable body (30) and/or as an unlocking/locking and/or tensioning element of the unlocking/locking and/or tensioning unit (9), and/or **in that** the second pivot (D2) is designed as a supporting element (42) of the interchangeable body (30).

14. Construction vehicle according to one of the preceding claims, **characterized in that** provision is made of a sensor unit (29), in particular in the form of a mechanical sensing device which is movable by way of a body-side coupling element, for identifying a coupled-on interchangeable body (30), and/or **in that** the base vehicle (1) has a control unit for control of the speed of travel according to the type of the coupled-on interchangeable body and/or for control of the speed of travel according to whether an interchangeable body (30) is coupled on or not.

15. Construction vehicle according to one of the preceding claims, **characterized in that** provision is made of an operator control element (12), arranged outside the driver's unit, for the operation of the unlocking/locking and/or tensioning unit (9).

16. Construction vehicle according to one of the preceding claims, **characterized in that** the control unit has at least two operating modes, such as a driving mode and an interchange mode, wherein, in the driving mode, an activation of at least one driving function, such as automatic re-tensioning of the unlocking/locking and/or tensioning unit (9), and/or control of the speed of travel and/or a deactivation of an interchange function, such as the locking of the operator-control element arranged outside the driver's unit, and/or, in the interchange mode, a deactivation of a driving function and/or an activation of an interchange function, such as the release of the operator-control element arranged outside the driver's unit, are/is provided.

17. Method for operating a construction vehicle and/or a base vehicle (1) with/for a body, in particular a bed body with a tipping unit, wherein the base vehicle uses a driver's unit, in particular with a driver's cab (2), and a steering unit for steering the base vehicle, wherein the base vehicle (1) uses a vehicle-side coupling unit (9, 10, 11) for coupling and/or decoupling of an interchangeable body (30), which has one or more vehicle-side coupling elements (10, 17), and wherein use is made of an interchangeable body (30) which uses one or more body-side coupling elements (16, 21) for coupling of the interchangeable body (30) to the base vehicle (1), wherein use is made of at least one first pivot, around which the interchangeable body (30) is rotated at a first radius during the coupling and/or decoupling, wherein use is made of a lifting device (25) with a lifting drive (9) for lifting the interchangeable body (30), wherein the base vehicle (1) uses a drive unit, which is designed as an unlocking/locking and/or tensioning unit (9), and at least one first vehicle-side coupling element (10) of the coupling unit (9, 10, 11), the position of which is changed by the drive unit (9), **characterized in that** the, in particular linear, drive unit (9) designed as an unlocking/locking and/or tensioning unit is also designed as the lifting drive of the lifting device, wherein a rear vehicle-side coupling element (17) has a guide surface (18) extending downwards from the rear forwards, and a front vehicle-side coupling element (10) has an unlocking/locking and/or tensioning surface (13) extending downwards from the front rearwards, and/or **in that**, in a state of the interchangeable body (30) in which it is braced and/or locked to the base vehicle (1), a rear body-side coupling element (21) engages below the downwardly extending guide surface (18) of the rear vehicle-side coupling element (17) and a front body-side coupling element (16) engages below the downwardly extending unlocking/locking and/or tensioning surface (13) of the front vehicle-side coupling element (19).

18. Method according to preceding Claim 17, **characterized in that** at least one first drive phase of the drive unit (9), which is designed in particular as a lifting drive, is configured as an unlocking/locking and/or tensioning phase, and **in that** a second drive phase of the drive unit (9), designed in particular as a lifting drive, is configured as a lifting or lowering phase of the lifting device.

19. Method according to either of preceding Claims 17 and 18, **characterized in that** use is made of at least one second pivot (D2), around which the interchangeable body (30) is rotated at a second radius (R2) during the coupling and/or decoupling phase, wherein the interchangeable body (30) rotates around the first pivot (D1) during a first rotational phase and rotates around the second pivot (D2) during a second rotational phase, wherein in particular the first radius (R1) associated with the first pivot (D1) is configured to be smaller than the second radius (R2) associated with the second pivot (D2), and/or **in that** the first pivot (D1) is designed as an unlocking/locking and/or tensioning element (21) of the unlocking/locking and/or tensioning unit (9), and/or **in that** the second pivot (D2) is designed as a supporting element (42) of the interchangeable body (30).

## Revendications

1. Véhicule de chantier ayant un véhicule de base (1) et une superstructure, en particulier une superstructure en benne avec une unité de basculement, le véhicule de base comprenant une unité de conduite, en particulier avec une cabine de conduite (2), et une unité de direction pour diriger le véhicule de base, en particulier une direction pivotante (5) avec une articulation (8), direction à bras d'essieu, une direction par bras de véhicule, une direction par les roues arrière, une direction par les roues avant ou une direction par les quatre roues, l'articulation (8) étant notamment agencée entre deux unités de véhicule (6, 7) du véhicule de base (1) étant aptes à pivoter l'une par rapport à l'autre, le véhicule de base (1) présentant une unité d'accouplement (9, 10, 11) pour l'accouplement et/ou le désaccouplement d'une structure interchangeable (30) ayant un ou plusieurs éléments d'accouplement (10, 17) côté véhicule, et une structure interchangeable (30) étant prévue, laquelle comprend un ou plusieurs éléments d'accouplement (16, 21) côté structure pour l'accouplement de la structure interchangeable (30) au véhicule de base (1), au moins un premier axe de rotation (Di) étant prévu, autour duquel la structure interchangeable (30) peut être tournée avec un premier rayon (R1) pendant l'accouplement et/ou le désaccouplement, un dispositif de levage (25) avec un entraînement de levage (9) étant prévu pour soulever la structure interchangeable (30), le véhicule de base (1) présentant une unité d'entraînement réalisée sous forme d'unité de déverrouillage/de verrouillage et/ou de serrage (9) et au moins un premier élément d'accouplement (10) côté véhicule de l'unité d'accouplement (9, 10, 11), dont la position peut être modifiée par l'unité d'entraînement (9), l'unité d'entraînement (9) réalisée sous forme d'unité de déverrouillage/de verrouillage et/ou de serrage, en particulier linéaire, étant également réalisée sous forme d'entraînement de levage du dispositif de levage, **caractérisé en ce qu'**un élément d'accouplement arrière (17) côté véhicule présente une surface de guidage (18) s'étendant vers le bas de l'arrière vers l'avant et qu'un élément d'accouplement avant (10) côté véhicule présente une surface de déverrouillage/verrouillage s'étendant vers le bas de l'avant vers l'arrière et/ou de serrage (13) et/ou que, dans un état verrouillé et/ou serré de la structure interchangeable (30) sur le véhicule de base (1), un élément d'accouplement arrière (21) côté structure s'engage sous la surface de guidage (18) s'étendant vers le bas de l'élément d'accouplement arrière (17) côté véhicule et un élément d'accouplement avant (16) côté structure s'engage sous la surface de déverrouillage/verrouillage et/ou de serrage (13) s'étendant vers le bas de l'élément d'accouplement avant (19) côté véhicule.

2. Véhicule de chantier selon la revendication 1, **caractérisé en ce que** l'unité d'entraînement est une unité d'entraînement linéaire, en particulier un vérin de levage hydraulique (9), une distance (A) entre au moins deux éléments d'accouplement (10, 16, 21) côté véhicule ou côté structure étant apte à être modifiée par l'unité d'entraînement (9).

3. Véhicule de chantier selon l'une des revendications précédentes, **caractérisé en ce qu'**une direction de réglage et/ou d'entraînement de l'unité d'entraînement linéaire (9) et/ou du premier élément d'accouplement (10) côté véhicule est orientée parallèlement à la direction longitudinale et/ou à la direction de déplacement du véhicule de base (1), en particulier en déplacement en ligne droite.

4. Véhicule de chantier selon l'une des revendications précédentes, **caractérisé en ce que** le dispositif de levage (25) comprend au moins un élément d'engagement (27) présentant une surface de contact, destiné à être agencé sur la structure interchangeable (30) et/ou à soulever la structure interchangeable (30) dans une position de levage, le centre de gravité de la structure interchangeable (30) étant notamment situé, au moins dans la position de levage, entre la surface de contact de l'élément d'engagement (27) et le premier axe de rotation (21, D1), et/ou **en ce que** le dispositif de levage (25), dans la position de levage pour soulever la structure interchangeable (30), agit sur cette structure interchangeable (30) avec un élément d'engagement (27) agencé devant le centre de gravité de la structure interchangeable (30) par rapport au premier sens de marche, en particulier le sens de marche avant avec une unité de conduite et/ou une cabine de conduite (2) disposée sur le devant la structure.

5. Véhicule de chantier selon l'une des revendications précédentes, **caractérisé en ce que** le dispositif de levage comprend un agencement de levier (26), en particulier une genouillère (25), l'agencement de levier (26) et/ou la genouillère (25) présentant en particulier la surface de contact et/ou l'élément d'engagement (27).

6. Véhicule de chantier selon l'une des revendications précédentes, **caractérisé en ce qu'**au moins une première phase d'entraînement de l'unité d'entraînement (9) réalisée en particulier comme entraînement de levage est réalisée comme phase de déverrouillage/verrouillage et/ou de serrage et **en ce qu'**une deuxième phase d'entraînement de l'unité d'entraînement (9) réalisée en particulier comme entraînement de levage est réalisée comme phase de levage ou d'abaissement du dispositif de levage.

7. Véhicule de chantier selon l'une des revendications précédentes, **caractérisé en ce qu'**il est prévu une roue libre par l'intermédiaire d'une section de roue libre, en particulier sous la forme d'un guidage à trou oblong avec un élément de butée relié à l'agencement de levier (25, 26), la section de roue libre étant supérieure ou égale à une variation de distance prévue pour le serrage et/ou le verrouillage entre deux éléments d'accouplement prévus pour le serrage et/ou le verrouillage de la structure interchangeable (30).

8. Véhicule de chantier selon l'une des revendications précédentes, **caractérisé en ce qu'**au moins un des éléments d'accouplement (10, 16, 17, 21) côté véhicule et/ou côté structure présente une surface de déverrouillage et/ou de verrouillage et/ou de serrage (13) inclinée par rapport à l'axe longitudinal et/ou au sens de marche du véhicule de base (1), au moins l'un des éléments d'accouplement (10, 16, 17, 21) côté véhicule et/ou côté structure étant notamment conçu sous la forme d'une cale de déverrouillage et/ou de verrouillage et/ou de serrage (10).

9. Véhicule de chantier selon l'une des revendications précédentes, **caractérisé en ce qu'**au moins l'un des éléments d'accouplement (10, 17) côté véhicule présente une ouverture de réception (20) orientée vers un côté opposé à l'unité de conduite et/ou à la cabine de conduite (2), en particulier vers un côté arrière, du véhicule de base (1) pour recevoir au moins l'un des éléments d'accouplement (21) côté structure.

10. Véhicule de chantier selon l'une des revendications précédentes, **caractérisé en ce que** l'élément d'accouplement (17) côté véhicule avec ouverture de réception (20) présente deux surfaces de guidage (18, 19) s'étendant l'une vers l'autre en oblique par rapport à un premier sens de marche, en particulier un sens de marche avant avec une unité de conduite et/ou une cabine de conduite (2) agencée devant la structure.

11. Véhicule de chantier selon l'une des revendications précitées, **caractérisé en ce qu'**il est prévu au moins un deuxième axe de rotation (D2) autour duquel la structure interchangeable (30) est apte à tourner avec un deuxième rayon (R2) pendant la phase d'attelage et/ou de dételage, la structure interchangeable (30) étant apte à tourner autour du premier axe de rotation (D1) dans une première phase de rotation et étant apte à tourner autour du deuxième axe de rotation (D2) dans une deuxième phase de rotation.

12. Véhicule de chantier selon l'une des revendications précédentes, **caractérisé en ce que** le premier rayon (R1) du premier axe de rotation (D1) est inférieur au deuxième rayon (R2) du deuxième axe de rotation (D2).

13. Véhicule de chantier selon l'une des revendications précédentes, **caractérisé en ce que** le premier axe de rotation (D1) est réalisé sous forme d'élément de boulon (21) de la structure interchangeable (30) et/ou sous forme d'élément de déverrouillage/verrouillage et/ou de serrage de l'unité de déverrouillage/verrouillage et/ou de serrage (9) et/ou **en ce que** le deuxième axe de rotation (D2) est réalisé sous forme d'élément de support (42) de la structure interchangeable (30).

14. Véhicule de chantier selon l'une des revendications précédentes, **caractérisé en ce qu'**il est prévu une unité de détection (29), en particulier sous la forme d'un palpeur mécanique mobile à travers un élément d'accouplement côté structure, pour détecter une structure interchangeable (30) accouplée et/ou **en ce que** le véhicule de base (1) présente une unité de commande pour une commande de la vitesse de déplacement en fonction du type de structure interchangeable accouplée et/ou pour une commande de la vitesse de déplacement selon qu'une structure interchangeable est accouplée ou non.

15. Véhicule de chantier selon l'une des revendications susmentionnées, **caractérisé en ce qu'**un élément de commande (12) agencé à l'extérieur de l'unité de conduite est prévu pour la commande de l'unité de déverrouillage/de verrouillage et/ou de serrage (9).

16. Véhicule de chantier selon l'une des revendications précitées, **caractérisé en ce que** l'unité de commande présente au moins deux modes de fonctionnement, tel qu'un mode de conduite et un mode de changement ; dans le mode de conduite, une activation d'au moins une fonction de conduite, comme le resserrage automatique de l'unité de déverrouillage/verrouillage et/ou de serrage (9) et/ou le contrôle de la vitesse de déplacement et/ou une désactivation d'une fonction de changement étant possibles, tel que le blocage de l'élément de commande agencé à l'extérieur de l'unité de conduite, et/ou, dans le mode de changement, une désactivation d'une fonction de conduite et/ou une activation d'une fonction de changement telle que la libération de l'élément de commande agencé à l'extérieur de l'unité de conduite est prévue.

17. Procédé pour faire fonctionner un véhicule de chantier et/ou un véhicule de base (1) avec/pour une superstructure, en particulier une superstructure en benne avec une unité de basculement, le véhicule de base utilisant une unité de conduite, en particulier avec une cabine de conduite (2), et une unité de direction pour diriger le véhicule de base, le véhicule de base (1) comportant une unité d'accouplement côté véhicule (9, 10, 11) pour l'accouplement et/ou le désaccouplement d'une structure interchangeable (30) avec un ou plusieurs éléments d'accouplement (10, 17) côté véhicule, et dans lequel on utilise une structure interchangeable (30) qui comporte un ou plusieurs éléments d'accouplement (16, 21) côté structure pour relier la structure interchangeable (30) au véhicule de base (1), le véhicule utilisant au moins un premier axe de rotation autour duquel la structure interchangeable (30) est tournée avec un premier rayon pendant l'accouplement et/ou le désaccouplement, un dispositif de levage (25) avec un entraînement de levage (9) étant utilisé pour soulever la structure interchangeable (30), le véhicule de base (1) utilisant une unité d'entraînement conçue comme une unité de déverrouillage/verrouillage et/ou de serrage (9) et au moins un premier élément d'accouplement (10) côté véhicule de l'unité d'accouplement (9, 10, 11), dont la position est modifiée par l'unité d'entraînement (9), **caractérisé en ce que** l'unité d'entraînement (9), conçue sous la forme d'une unité de déverrouillage/verrouillage et/ou de serrage, en particulier linéaire, est également conçue en tant qu'entraînement de levage du dispositif de levage, un élément d'accouplement arrière (17) côté véhicule présentant une surface de guidage (18) s'étendant vers le bas de l'arrière vers l'avant et un élément d'accouplement avant (10) côté véhicule présentant une surface de déverrouillage/verrouillage (12) s'étendant vers le bas de l'avant vers l'arrière et/ou de serrage (13) et/ou **en ce que**, dans un état verrouillé et/ou serré de la structure interchangeable (30) sur le véhicule de base (1), un élément d'accouplement arrière (21) côté structure s'engage sous la surface de guidage (18) s'étendant vers le bas de l'élément d'accouplement arrière (17) côté véhicule et un élément d'accouplement avant (16) côté structure passe sous la surface de déverrouillage/de verrouillage et/ou de serrage (13) s'étendant vers le bas de l'élément d'accouplement avant (19) côté véhicule.

18. Procédé selon la revendication 17 précitée, **caractérisé en ce qu'**au moins une première phase d'entraînement de l'unité d'entraînement (3), conçue en particulier en tant qu'entraînement de levage, est réalisée comme phase de déverrouillage/verrouillage et/ou de serrage et **en ce qu'**une deuxième phase d'entraînement de l'unité d'entraînement (9), conçue en particulier en tant qu'entraînement de levage est réalisée comme phase de levage ou d'abaissement du dispositif de levage.

19. Procédé selon l'une des revendications 17 ou 18 précitées, **caractérisé en ce qu'**on utilise au moins un deuxième axe de rotation (D2) autour duquel on fait tourner la structure interchangeable (30) avec un deuxième rayon (R2) pendant la phase d'accouplement et/ou de désaccouplement, la structure interchangeable (30) tournant autour du premier axe de rotation (D1) dans une première phase de rotation et tournant autour du deuxième axe de rotation (D2) dans une deuxième phase de rotation, le premier rayon (R1) du premier axe de rotation (D1) étant notamment plus petit que le deuxième rayon (R2) du deuxième axe de rotation (D2) et/ou **en ce que** le premier axe de rotation (D1) est réalisé sous forme d'élément de déverrouillage/verrouillage et/ou de serrage (21) de l'unité de déverrouillage/verrouillage et/ou de serrage (9) et/ou **en ce que** le deuxième axe de rotation (D2) est réalisé sous forme d'élément d'appui (42) de la structure interchangeable (30).
